(19) Europäisches Patentamt
European Patent Office
Office européen des brevets

(11) **EP 3 660 353 B1**

(12) **FASCICULE DE BREVET EUROPEEN**

(45) Date de publication et mention
de la délivrance du brevet:
**15.06.2022  Bulletin 2022/24**

(21) Numéro de dépôt: **19212042.6**

(22) Date de dépôt: **28.11.2019**

(51) Classification Internationale des Brevets (IPC):
**F16H 19/06** *(2006.01)*    **F16H 25/20** *(2006.01)*

(52) Classification Coopérative des Brevets (CPC):
**F16H 19/0622; F16H 25/20**

(54) **CAPTEUR D'EFFORT POUR ACTIONNEUR A CABLE ET PROCÉDÉS ASSOCIÉS**

KRAFTSENSOR FÜR STELLGLIED MIT KABEL UND VERFAHREN

FORCE SENSOR FOR ACTUATOR WITH CABLE AND CORRESPONDING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2018  FR 1872138**

(43) Date de publication de la demande:
**03.06.2020  Bulletin 2020/23**

(73) Titulaire: **Commissariat à l'Energie Atomique et aux Energies
Alternatives
75015 Paris (FR)**

(72) Inventeur: **GARREC, Philippe
91190 GIF-SUR-YVETTE (FR)**

(74) Mandataire: **Lavialle, Bruno François Stéphane
Cabinet Boettcher
16, rue Médéric
75017 Paris (FR)**

(56) Documents cités:
**EP-A1- 3 243 606        WO-A1-2014/128178
US-A1- 2013 345 877**

**Description**

DOMAINE DE L'INVENTION

L'invention concerne un actionneur à câble comportant un ensemble vis/écrou dont l'écrou est mobile en translation et attelé par un câble à un élément à déplacer. L'invention concerne plus particulièrement les capteurs d'effort pour actionneur à câble dont le câble réalise une fonction d'anti-rotation de l'écrou par rapport à la vis.

ARRIERE PLAN DE L'INVENTION

Il est connu des actionneurs à câbles comportant une vis montée sur un châssis et un écrou coopérant avec la vis. L'écrou est associé à des moyens d'anti-rotation de sorte qu'une rotation relative de la vis et de l'écrou provoque un déplacement axial de l'écrou. Un ou plusieurs câbles associés à l'écrou sont reliés à une sortie de l'actionneur qui peut être rotative (lorsque les câbles sont reliés à des poulies) ou linéaire (lorsque les câbles sont reliés directement à la charge à manipuler). Les capteurs d'effort pour de tels actionneurs sont généralement montés directement sur la sortie de l'actionneur et se révèlent encombrants, chers et/ou peu précis. En outre, ces capteurs d'effort étant directement accouplés aux segments du bras articulé, ils supportent des chocs et vibrations en provenance des segments et des charges qu'ils supportent. Pour éviter une trop grande fragilité, ils doivent donc être surdimensionnés ce qui augmente leur volume et diminue leur sensibilité. Ainsi, le pilotage en effort des actionneurs à câble, qui disposent de caractéristiques intéressantes notamment en terme de compacité, est malaisé ou couteux ce qui restreint leur diffusion. Le document EP 3 243 606 A1 décrit un actionneur à câble pour actionner un élément de traction de joint d'exosquelette.

OBJET DE L'INVENTION

L'invention a pour objet d'améliorer la précision et les coûts de fabrication et/ou de maintenance d'un actionneur à câble.

BREVE DESCRIPTION DE L'INVENTION

Dans ce but, on prévoit un actionneur à câble conformément à la revendication 1 et comprenant un châssis, une vis montée à rotation sur le châssis et s'étendant selon un premier axe, un écrou coopérant avec la vis, un premier câble attelé à l'écrou et fonctionnellement relié à une sortie de l'actionneur, un deuxième câble attelé à l'écrou et fonctionnellement relié à une sortie de l'actionneur, un moteur agencé pour entrainer en rotation la vis. Le premier câble est agencé pour exercer des efforts s'opposant à un entraînement en rotation de l'écrou par la vis pour constituer des moyens d'anti-rotation de sorte qu'une rotation de la vis ou de l'écrou sous l'action du moteur provoque un déplacement de l'écrou sur la vis. L'actionneur selon l'invention comprend des moyens de déterminer une position effective de l'écrou relativement au châssis, des moyens de comparer la position effective de l'écrou relativement au châssis avec une position théorique de l'écrou relativement au châssis afin d'obtenir une déviation de position de l'écrou et des moyens de déterminer un effort appliqué sur la sortie de l'actionneur en fonction de la déviation de position de l'écrou.

On obtient ainsi un actionneur dont la mesure de l'effort appliqué sur la sortie est effectuée à l'aide d'un dispositif simple s'appuyant sur des moyens de mesure de position qui sont des moyens généralement plus fiables que les capteurs d'efforts connus. L'actionneur selon l'invention bénéficie de plus du facteur d'amplification que le pas de la vis provoque sur le déplacement de l'écrou soumis à la charge appliquée sur la sortie de l'actionneur.

Avantageusement, la déviation de position de l'écrou est une déviation angulaire mesurée autour du premier axe.

Une détection fiable de la position effective de l'écrou est possible lorsque les moyens de déterminer la position effective de l'écrou relativement au châssis comprennent un induit linéaire solidaire du châssis et un inducteur relié à l'écrou.

La fiabilité de la mesure est améliorée lorsque les moyens de déterminer la position effective de l'écrou relativement au châssis comprennent un réflecteur solidaire du châssis et un capteur de distance relié à l'écrou. La fiabilité de la mesure est encore améliorée lorsque le capteur de distance comprend un émetteur/récepteur d'ondes.

Selon un mode de réalisation particulier, les moyens de déterminer la position effective de l'écrou relativement au châssis comprennent un capteur de distance solidaire du châssis et une cible reliée à l'écrou. La fiabilité de la mesure est améliorée lorsque le capteur de distance comprend un émetteur/récepteur d'ondes.

1. L'actionneur est peu perturbé par l'environnement lumineux lorsque les moyens de déterminer la position effective de l'écrou relativement au châssis comprennent une pluralité de pôles magnétisés solidaires de l'écrou et un capteur magnétique. Il est possible de reproduire des textures en fonctionnement haptique lorsque l'actionneur comprend un excitateur magnétique pour appliquer un effort sur au moins un pôle magnétisé.

Une réalisation économique et fiable est obtenue lorsque les moyens de déterminer la position effective de l'écrou relativement au châssis comprennent un couplage mécanique reliant un premier élément relié au châssis et un deuxième élément solidaire de l'écrou, le premier élément comprenant :

- un troisième arbre monté à rotation sur le châssis selon un axe sensiblement parallèle au premier axe ;
- une douille montée à coulissement sur le troisième arbre et pourvue de moyens de bloquer une rotation relative de la douille et du troisième arbre ;
- un codeur rotatif solidaire en rotation du troisième arbre

La sensibilité de l'actionneur aux vibrations est réduite lorsque le couplage mécanique comprend un lien flexible voire que le lien flexible comprend une première extrémité pourvue d'une liaison rotule avec l'un des premiers ou deuxième élément, la deuxième extrémité du lien flexible étant encastrée sur l'autre des premier ou deuxième éléments. Avantageusement encore, le couplage mécanique comprend une bielle rigide dont une première extrémité est pourvue d'une liaison rotule avec l'un des premiers ou deuxième élément, la deuxième extrémité de la bielle étant pourvue d'une liaison pivot avec l'autre des premier ou deuxième éléments.

Selon un mode de réalisation particulièrement avantageux, le couplage mécanique comprend une première branche dont la première extrémité est reliée par une liaison rotule à une première extrémité d'une deuxième branche, la deuxième extrémité de la première branche étant solidaire de l'un des premiers ou deuxième élément et la deuxième extrémité de la deuxième branche étant solidaire de l'autre des premier ou deuxième élément, la deuxième branche comprenant une portion télescopique. Avantageusement, le codeur rotatif possède un mode moteur pour appliquer un effort d'excitation sur l'écrou. 2. Selon un mode de réalisation particulier, la déviation de position de l'écrou est une déviation linéaire mesurée selon le premier axe. Dans ce cas, les moyens de déterminer une position effective de l'écrou relativement au châssis peuvent comprendre un capteur de distance à enrouleur de fil solidaire du châssis, une extrémité du fil étant reliée à l'écrou. Alternativement, les moyens de déterminer la position effective de l'écrou relativement au châssis peuvent comprendre un capteur de distance solidaire du châssis et une cible reliée à l'écrou. Avantageusement, le capteur de distance possède un mode moteur pour appliquer un effort d'excitation sur l'écrou.

L'actionneur à câble de l'invention peut être un actionneur dans lequel la sortie de l'actionneur est un arbre monté à rotation sur le châssis ou dans lequel la sortie de l'actionneur est montée à coulissement sur le châssis.

L'invention concerne également un procédé de mesure d'un effort appliqué en sortie d'un actionneur à câble conformément à la revendication 22.

Le procédé de mesure d'effort comprend les étapes suivantes :

- déterminer une position effective de l'écrou relativement au châssis ;
- comparer la position effective de l'écrou relativement au châssis avec une position théorique de l'écrou relativement au châssis afin d'obtenir une déviation de position de l'écrou ;
- déterminer un effort appliqué sur la sortie de l'actionneur en fonction de la déviation de positon de l'écrou.

Le procédé de mesure est applicable aussi bien à une situation dans laquelle la déviation de position est une déviation angulaire autour du premier axe ou dans laquelle la déviation de position est une déviation linéaire selon le premier axe.

L'invention concerne également un procédé de détermination d'une précharge d'un actionneur à câble conformément à la revendication 25.

Le procédé de mesure de la précharge comprend les étapes suivantes :

- amener l'écrou à une position prédéterminée relativement au châssis ;
- immobiliser la sortie de l'actionneur ;
- commander le moteur pour qu'il applique un couple prédéterminé à la vis ;
- déterminer une position effective de l'écrou relativement au châssis ;
- comparer la position effective de l'écrou relativement au châssis avec la position prédéterminée de l'écrou relativement au châssis afin d'obtenir une déviation de position de l'écrou ;
- déterminer une précharge du premier câble en fonction de la déviation de position de l'écrou.
- D'autres caractéristiques et avantages de l'invention ressortiront à la lecture de la description qui suit de modes de réalisation particuliers non limitatifs de l'invention.

BREVE DESCRIPTION DES DESSINS

Il sera fait référence aux figures annexées, parmi lesquelles :

[Fig. 1] la figure 1 est une vue schématique en perspective partielle d'un vérin à câble selon l'invention ;
[Fig. 2] la figure 2 est une vue schématique en perspective d'un premier mode de réalisation de l'invention ;
[Fig. 3] la figure 3 est une vue schématique en perspective d'un procédé de détermination d'une précharge de câble selon l'invention ;
[Fig. 4] la figure 4 est une vue schématique en perspective d'un deuxième mode de réalisation de l'invention ;
[Fig. 5] la figure 5 est une vue schématique en perspective d'un troisième mode de réalisation de l'invention ;
[Fig. 6] la figure 6 est une vue schématique de détail du troisième mode de réalisation de l'invention dans un premier état ;
[Fig. 7] la figure 7 est une vue schématique de détail du troisième mode de réalisation de l'invention dans un deuxième état ;
[Fig. 8] la figure 8 est une vue schématique de détail d'un quatrième mode de réalisation de l'invention ;
[Fig. 9] la figure 9 est une vue schématique de détail d'un cinquième mode de réalisation de l'invention dans un premier état ;
[Fig. 10] la figure 10 est une vue schématique de détail d'un sixième mode de réalisation de l'invention dans un premier état ;
[Fig. 11] la figure 11 est une vue schématique de détail d'un sixième mode de réalisation de l'invention dans un deuxième état ;
[Fig. 12] la figure 12 est une vue schématique de détail d'un septième mode de réalisation de l'invention
[Fig. 13] la figure 13 est une vue schématique en perspective d'un huitième mode de réalisation de l'invention ;
[Fig. 14] la figure 14 est une vue schématique en perspective d'un neuvième mode de réalisation de l'invention ;
[Fig. 15] la figure 15 est une vue schématique en perspective d'un dixième mode de réalisation de l'invention ;
[Fig. 16] la figure 16 est une vue schématique en perspective d'un onzième mode de réalisation de l'invention
[Fig. 17] la figure 17 est une vue schématique en perspective d'un douzième mode de réalisation de l'invention ;
[Fig. 18] la figure 18 est une vue schématique en perspective d'un treizième mode de réalisation de l'invention ;
[Fig. 19] la figure 19 est une vue schématique en perspective d'un quatorzième mode de réalisation de l'invention.

DESCRIPTION DETAILLEE DE L'INVENTION

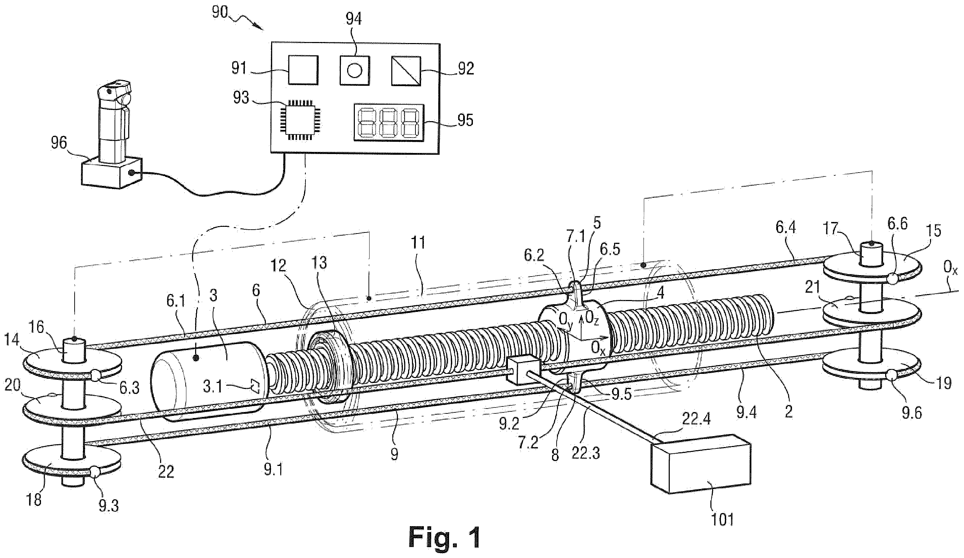

En référence à la figure 1, l'actionneur de l'invention, généralement désigné 100, comprend un châssis 10, ici une portion de cylindre 11 droit comprenant une base 12 au centre de laquelle un palier 13 accueille une vis 2 à rotation autour d'un premier axe Ox horizontal. La vis 2 est une vis à billes de pas $p_2$ qui est entraînée en rotation par un moteur électrique 3 comprenant un premier codeur rotatif 3.1. Un écrou 4 coopère avec la vis 2 et comprend un premier œillet 5 en saillie radiale de l'écrou 4. Un premier câble 6 s'étend parallèlement au premier axe Ox et comprend un premier tronçon 6.1 maintenu en sa première extrémité 6.2 dans le premier œillet 5 par une première sertissure 7.1. La deuxième extrémité 6.3 du premier tronçon 6.1 du premier câble 6 est sertie sur une première poulie 14 solidaire d'un premier arbre 16 monté à rotation sur le châssis 10 selon un axe perpendiculaire au premier axe Ox. Le premier câble 6 comprend également un deuxième tronçon 6.4 de premier câble 6 s'étendant parallèlement au premier axe Ox de part et d'autre d'un plan P orthogonal au premier axe Ox comprenant le premier œillet 5 et qui est maintenu en sa première extrémité 6.5 dans le premier œillet 5 par la première sertissure 7.1. La deuxième extrémité 6.6 du deuxième tronçon 6.4 du premier câble 6 est sertie sur une deuxième poulie 15 solidaire d'un deuxième arbre 17 monté à rotation sur le châssis 10 selon un axe perpendiculaire au premier axe Ox.

L'écrou 4 comprend un deuxième œillet 8 en saillie radiale de l'écrou 4 de manière à être diamétralement opposé au premier œillet 5. Un deuxième câble 9 s'étend parallèlement au premier axe Ox et comprend un premier tronçon 9.1 de deuxième câble 9 maintenu en sa première extrémité 9.2 dans le deuxième œillet 8 par une deuxième sertissure 7.2. La deuxième extrémité 9.3 du premier tronçon 9.1 du deuxième câble 9 est reliée à une troisième poulie 18 solidaire du premier arbre 16 monté à rotation sur le châssis 10 selon un axe perpendiculaire au premier axe Ox.

Le deuxième câble 9 comprend également un deuxième tronçon 9.4 s'étendant parallèlement au premier axe Ox de part et d'autre d'un plan P orthogonal au premier axe Ox comprenant le deuxième œillet 8 et qui est maintenu en sa première extrémité 9.5 dans le deuxième œillet 8 par la deuxième sertissure 7.2. La deuxième extrémité 9.6 du deuxième tronçon 9.4 du deuxième câble 9 est sertie sur une quatrième poulie 19 solidaire du deuxième arbre 17 monté à rotation sur le châssis 10 selon un axe perpendiculaire au premier axe Ox.

Les premier câbles 6 et deuxième câble 9 sont chacun préchargés à une tension de précharge t6,9 égale à la moitié de la tension de précharge totale $t_0$, par exemple en agissant sur la distance séparant le premier arbre 16 et le deuxième arbre 17.

L'actionneur 100 comprend également une cinquième poulie 20 et une sixième poulie 21 respectivement solidaires en rotation du premier arbre 16 et du deuxième arbre 17. Un troisième câble 22 s'étend entre la cinquième poulie 20 et la sixième poulie 21 et comprend une première extrémité 22.1 sertie sur la cinquième poulie 20 et une deuxième extrémité 22.2 sertie sur la sixième poulie 21. Un support 22.3 est serti sur le troisième câble 22 pour constituer une sortie 22.4 de l'actionneur 100 destinée à être reliée à une charge 101 à déplacer.

Le moteur 3 et son codeur 3.1 sont reliés à une unité de commande 90 de contrôle comprenant une unité 91 de détermination de la position de l'écrou 4, un comparateur 92, un calculateur 93, une mémoire 94 et un afficheur 95. Une poignée de commande 96 est également reliée à l'unité de commande 90.

Le premier câble 6 et le deuxième câble 9 étant tendus, ils exercent des efforts s'opposant à un entrainement en rotation de l'écrou 4 par la vis 2 lors d'une rotation du moteur 3 dans les deux sens de déplacement de l'écrou 4 relativement à la vis 2. Ils réalisent alors - en sus de leur fonction de transmission des efforts de déplacement depuis l'écrou 4 vers la charge 101 - une fonction d'anti-rotation de sorte qu'une rotation de la vis 2 sous l'action du moteur 3 provoque un déplacement de l'écrou 4 relativement à la vis 2. L'actionneur à câble 100 de l'invention permet un déplacement de la charge 101 dans deux sens opposés.

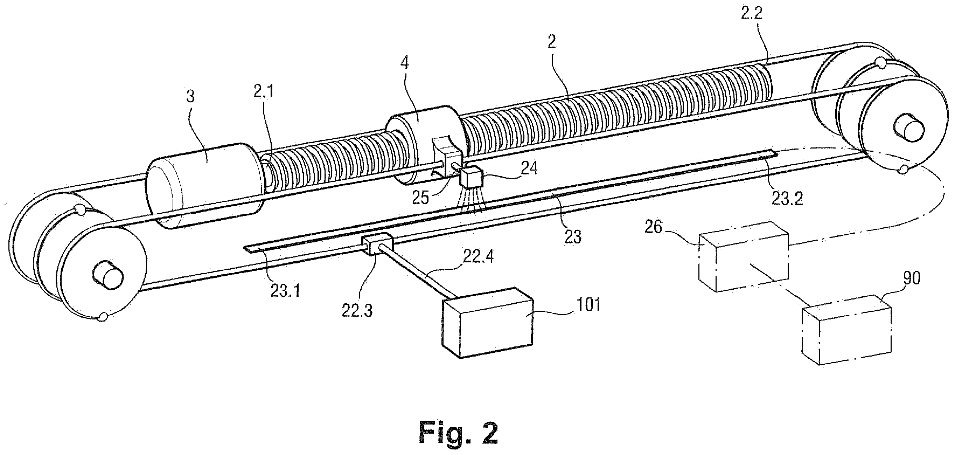

Selon un premier mode de réalisation de l'invention représenté en figure 2, un induit linéaire - ici un barreau 23 en matériau ferreux - solidaire du châssis 10 s'étend selon une direction sensiblement parallèle à l'axe Ox. La première extrémité 23.1 du barreau 23 s'étend sensiblement à l'aplomb d'une première extrémité 2.1 de la vis 2 et la deuxième extrémité 23.2 du barreau 23 s'étend sensiblement à l'aplomb d'une deuxième extrémité 2.2 de la vis 2. Un aimant 24 au néodyme est relié à l'écrou 4 par une première tige 25 de manière à se trouver sensiblement à l'aplomb du barreau 23. Un module 26 de traitement relié au barreau 23 mesure -ici par effet Hall- le champ magnétique engendré par la position relative de l'aimant 24 et du barreau 23 et convertit le champ magnétique mesuré en une estimation de la distance $D_{23\text{-}24}$ séparant l'aimant 24 et le barreau 23. Le module 26 est relié à l'unité de commande 90 de contrôle.

En fonctionnement, un utilisateur agit sur la poignée 96 pour commander un déplacement de la charge 101. L'unité 90 commande alors une rotation du moteur 3. Sous l'effet du moteur 3, la rotation de la vis 2 provoque une rotation identique de l'écrou 4 en raison des frottements de contact entre la vis 2 et l'écrou 4. Cette rotation met en tension le premier câble 6 et le deuxième câble 9 qui viennent alors exercer des efforts s'opposant à un entrainement en rotation de l'écrou 4 par la vis 2. Le premier câble 6 et le deuxième câble 9 réalisent alors - en sus de leur fonction de transmission des efforts de déplacement vers la charge 101 - une fonction d'anti-rotation de sorte qu'une rotation de la vis 2 sous l'action du moteur 3 provoque un déplacement de l'écrou 4 relativement à la vis 2.

Lorsque la charge 101 atteint la position souhaitée par l'utilisateur, celui-ci interrompt son action sur la commande 96. L'unité 91 détermine, au cours d'une première étape, une position théorique de l'écrou 4 sur la vis 2 basée sur le nombre de tours N du moteur mesuré par le codeur 3.1. L'unité 91 établit ainsi une position linéaire théorique de l'écrou 4 sur la vis 2 selon le premier axe Ox, mais également une position angulaire théorique de l'écrou 4 autour du premier axe Ox. La position théorique linéaire de l'écrou 4 sur la vis 2 correspond à la position selon le premier axe Ox qu'occuperait l'écrou 4 sur la vis 2 après un nombre de tours N hors charge, c'est-à-dire pour une masse nulle de la charge 101. La position angulaire théorique de l'écrou 4 autour de l'axe Ox correspond à la position autour de l'axe Ox qu'occuperait l'écrou 4 sur la vis 2 après un nombre de tours N hors charge, c'est-à-dire pour une masse nulle de la charge 101. Cette position angulaire théorique peut varier en fonction de la position linéaire théorique de l'écrou 4 sur la vis 2. Pour des commodités de description, nous considérerons que les positions angulaires et linéaires sont mesurées dans un repère orthonormé (Ox, Oy, Oz) lié à l'écrou 4

Le module 26 transmet la valeur de l'estimation de la distance $D_{23\text{-}24}$ au calculateur 93 qui la convertit en une position angulaire effective de l'écrou 4 autour de l'axe Ox. Le comparateur 92 compare la position angulaire effective de l'écrou 4 autour de l'axe Ox avec la position angulaire théorique de l'écrou autour de l'axe Ox et, par soustraction, le comparateur obtient une valeur $\delta_{ang4}$ de la déviation de la position angulaire de l'écrou 4.

Le calculateur 93 détermine alors un effort appliqué sur le support 22.3 par la charge 101 en fonction de la valeur $\delta_{ang4}$ de la déviation de la position angulaire de l'écrou 4.

Une telle détermination peut notamment se faire en résolvant l'équation 27 d'équilibrage de l'écrou suivante :

[Math 1]

$$C = \frac{2RE\rho^2 \sin\alpha}{(d-\overline{p}\alpha)(E-d+\overline{p}\alpha)} \times \frac{\sqrt{2\rho^2(1-\cos\alpha)+(d-\overline{p}\alpha)^2} + \sqrt{2\rho^2(1-\cos\alpha)+(E-d+\overline{p}\alpha)^2} - E + 2^{-1}\left(k_1^{-1}+k_2^{-1}\right)t_0}{k_1^{-1}\left(\frac{\rho^2\sin\alpha}{E-d+\overline{p}\alpha}+\overline{p}\right)\sqrt{\frac{2\rho^2(1-\cos\alpha)}{(d-\overline{p}\alpha)^2}+1} - k_2^{-1}\left(\frac{\rho^2\sin\alpha}{d-\overline{p}\alpha}-\overline{p}\right)\sqrt{\frac{2\rho^2(1-\cos\alpha)}{(E-d+\overline{p}\alpha)^2}+1}}$$

dans laquelle :

- C correspond au couple appliqué sur la première poulie 14,
- R correspond au rayon de la première poulie 14,
- E correspond à la distance qui sépare les points de tangence du premier câble 6 à la première poulie 14 et la deuxième poulie 15,
- $\alpha$ correspond à l'angle de rotation de l'écrou 4 par rapport au châssis 10,
- $\rho$ correspond au rayon d'ancrage du premier câble 6 par rapport à l'axe de l'écrou 4 (ou vis),
- d correspond à la distance du centre de l'écrou 4 au point de tangence du premier câble 6 sur la première poulie 14.
- $\bar{p}$ correspond au pas réduit du système vis 2 -écrou4, c'est-à-dire p2/2n ;
- $k_1$ correspond à la raideur du brin de premier câble 6 le plus court entre celui séparant l'écrou 4 de la première poulie 14 et celui séparant l'écrou 4 de la deuxième poulie 15 ;
- $k_2$ correspond à la raideur du brin de deuxième câble 9 le plus long entre celui séparant l'écrou 4 de la première poulie 14 et celui séparant l'écrou 4 de la deuxième poulie 15 ;$t_0$ correspond à la tension de précharge totale répartie sur les premier et deuxième câbles 6 et 9.

Les approximations amenant à cette équation ou en permettant sa résolution (développements limités par exemple) peuvent dépendre de la position linéaire de l'écrou 4 sur la vis 2.

On obtient ainsi un actionneur à câble 100 dont le couple aimant 24/induit 23 permet une estimation des tensions dans le premier câble 6 et le deuxième câble 9 et ainsi d'en déduire un effort exercé sur la sortie 22.4 de l'actionneur 100.

L'actionneur 100 selon le premier mode de réalisation de l'invention permet également d'effectuer une vérification de la précharge des câbles. En effet, l'équation d'équilibrage ci-dessus fait apparaître la précharge totale $t_0$ répartie sur les premier câble 6 et deuxième câble 9 et il est ainsi possible d'évaluer cette précharge $t_0$ à l'aide du procédé suivant.

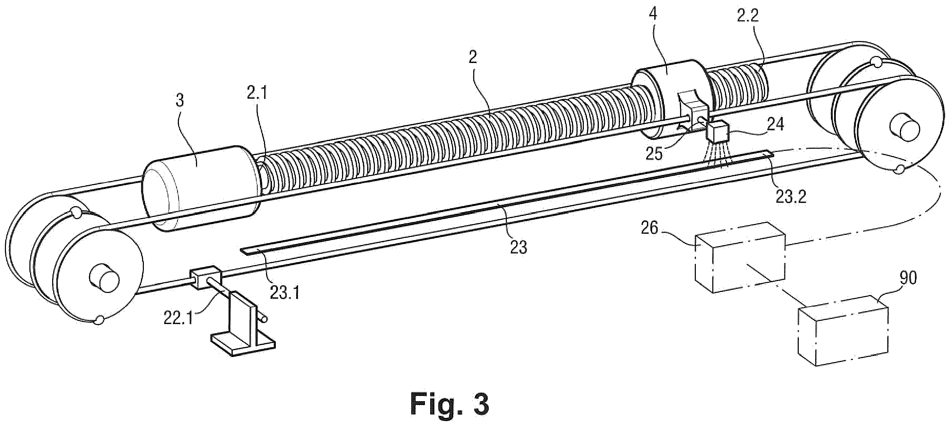

Selon une première étape (figure 3), on amène l'écrou à une position prédéterminée relativement au châssis, ici en la deuxième extrémité 2.2 de la vis 2.

Selon une deuxième étape, le support 22.3 est immobilisé en l'amenant en butée contre un élément fixe relativement au châssis 10.

Selon une troisième étape, on commande le moteur 3 pour qu'il applique un couple $C_p$ prédéterminé à la vis 2. Le couple Cp est, ici, appliqué en commandant l'application d'un courant d'alimentation $I_p$ connu au moteur 3, la valeur du couple appliqué par le moteur 3 sur la vis 2 est déterminée à l'aide de la caractéristique mettant en relation le courant d'entrée et le couple de sortie du moteur 3.

Selon une quatrième étape, le module 26 transmet la valeur de l'estimation de la distance $D_{23-24}$ au calculateur 93 qui la convertit en une position angulaire effective de l'écrou 4 autour de l'axe Ox.

Selon une cinquième étape, le comparateur 92 compare la position effective de l'écrou 4 relativement au châssis 10 avec la position prédéterminée de l'écrou 4 relativement au châssis 10 afin d'obtenir une valeur $\delta_{ang4}$ de la déviation de la position angulaire de l'écrou 4. Selon une sixième étape, le calculateur 93 détermine la valeur de la précharge totale $t_0$ répartie sur les premier câble 6 et deuxième câble 9 en fonction de la valeur $\delta_{ang4}$ de la déviation de la position angulaire de l'écrou 4.

La valeur déterminée de la précharge $t_0$ permet de vérifier que celle-ci est bien conforme à une valeur de référence $t_{0ref}$.

Les éléments identiques ou analogues à ceux précédemment décrits porteront une référence numérique identique à celle-ci dans la description qui suit des dix autres modes de réalisation de l'invention.

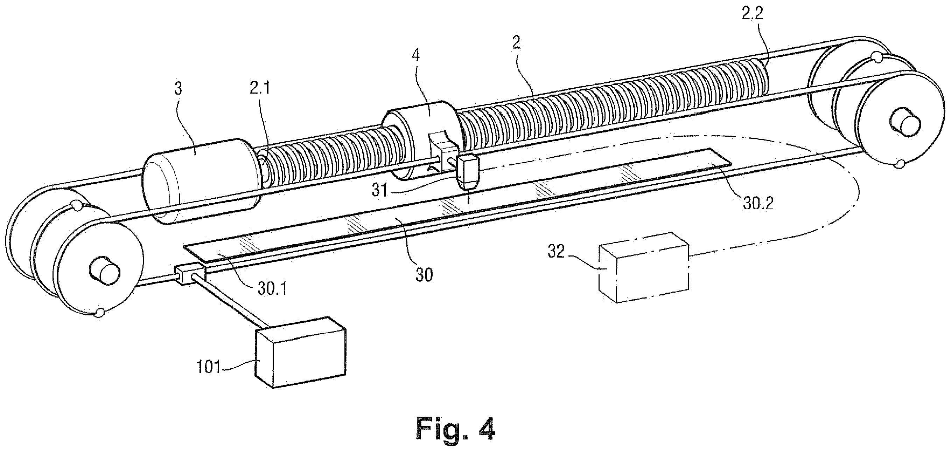

Selon un deuxième mode de réalisation représenté en figure 4, un réflecteur 30 -ici une tôle métallique blanchesolidaire du châssis 10 s'étend selon une direction sensiblement parallèle à l'axe Ox. La première extrémité 30.1 du réflecteur 30 s'étend sensiblement à l'aplomb de la première extrémité 2.1 de la vis 2 et la deuxième extrémité 30.2 du réflecteur 30 s'étend sensiblement à l'aplomb de la deuxième extrémité 2.2 de la vis 2. Un émetteur/récepteur laser 31 est relié à l'écrou 4 par la première tige 25 de manière à se trouver sensiblement à l'aplomb du réflecteur 30.

Un module 32 de traitement relié à l'émetteur/récepteur laser 31 mesure le temps de trajet d'un rayon laser émis par l'émetteur/récepteur 31 et réfléchit par le réflecteur 30 et convertit ce temps de trajet une estimation de la distance $D_{30-31}$ séparant l'émetteur/récepteur 31 et le réflecteur 30. Le module 32 est relié à l'unité 90 dont le calculateur 93 convertit la distance $D_{30-31}$ en une position angulaire effective de l'écrou 4 autour de l'axe Ox.

La détermination de l'effort sur la sortie 22.4 de l'actionneur 100 se fait de la même façon que pour le premier mode de réalisation de l'invention exposé précédemment.

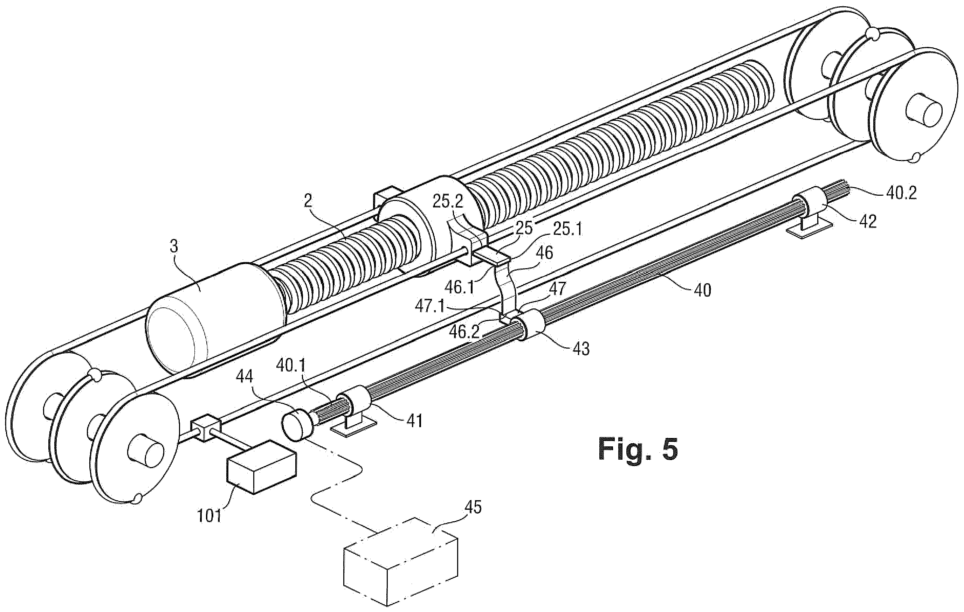

Selon un troisième mode de réalisation représenté en figure 5, un troisième arbre 40 s'étend selon un axe sensiblement parallèle au premier axe Ox. Le troisième arbre 40 est monté à rotation sur le châssis 10 à l'aide d'un premier roulement à billes 41 positionné en une première extrémité 40.1 du troisième arbre 40 et d'un deuxième roulement à billes 42 positionné en une deuxième extrémité 40.2 du troisième arbre 40. Le troisième arbre 40 est un arbre cannelé à billes sur lequel est monté à coulissement une douille 43. Un deuxième codeur rotatif 44 solidaire en rotation du troisième arbre 40 est relié à un module 45 de traitement relié lui-même relié à l'unité de commande 90 de contrôle.

6

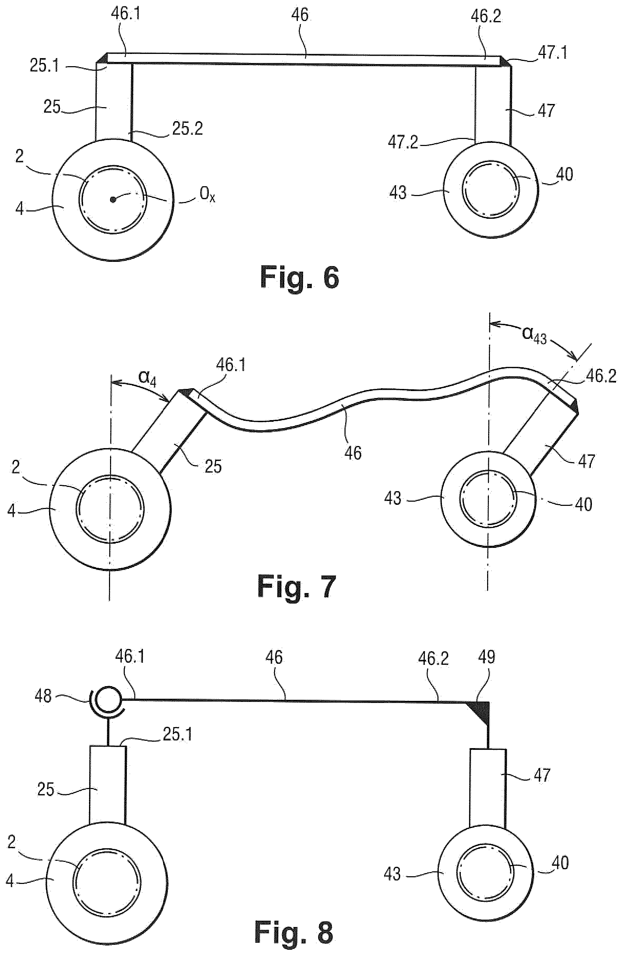

Comme visible en figure 6, la première extrémité 25.1 de la première tige 25 opposée à la deuxième extrémité 25.2 solidaire de l'écrou 4 est soudée sur une première extrémité 46.1 d'une lame 46 métallique. La deuxième extrémité 46.2 de la lame 46 est soudée à une première extrémité 47.1 de la deuxième tige 47. La deuxième extrémité 47.2 de la deuxième tige 47 est reliée à la douille 43.

La lame 46 réalise ainsi un couplage mécanique reliant l'écrou 4 et l'arbre 40 qui transmet une rotation d'angle $\alpha 4$ de l'écrou 4 autour de l'axe Ox en une rotation identique $\alpha 43$ de la douille 43 autour de l'axe de l'arbre 40, rotation qui est transmise au troisième arbre 40 (figure 7). La lame 46 possède une flexibilité adaptée à une transmission reproductible de l'angle $\alpha 4$ à la douille 43. En effet, le rapport qui lie $\alpha 4$ et $\alpha 43$ peut être linéaire (constant par exemple) ou variable dans le cas d'une lame flexible. Cependant un tel rapport est déterminable et reproductible et il est ainsi possible de déduire la valeur d'une rotation d'angle $\alpha 4$ à l'aide de la valeur de la rotation $\alpha 43$.

En fonctionnement, la position angulaire de l'écrou 4 est transmise par la lame 46 à la douille 43 qui, à son tour transmet cette position angulaire au troisième arbre 40. Le module 45 de traitement mesure la rotation du codeur 44 lié au troisième arbre 40 et le transmet à l'unité de commande 90. Le comparateur 92 de l'unité de commande 90 compare la position angulaire effective de l'écrou 4 autour de l'axe Ox avec la position angulaire théorique de l'écrou autour de l'axe Ox et, par soustraction, le comparateur 92 obtient une valeur $\delta_{ang4}$ de la déviation de la position angulaire de l'écrou 4.

Le calculateur 93 détermine alors un effort appliqué sur le support 22.3 par la charge 101 en fonction de la valeur $\delta_{ang4}$ de la déviation de la position angulaire de l'écrou 4 de la même façon que pour le premier mode de réalisation de l'invention exposé précédemment.

Selon un quatrième mode de réalisation représenté en figure 8, la première extrémité 46.1 de la lame 46 est pourvue d'une liaison rotule 48 avec la première extrémité 25.1 de la première tige 25 solidaire de l'écrou 4. La deuxième extrémité 46.2 de la lame 46 est, quant à elle, reliée par un encastrement 49 à la première extrémité 47.1 de la deuxième tige 47 reliée à la douille 43. La lame 46 permet donc une recopie de la position angulaire de l'écrou 4 autour de l'axe Ox vers la douille 43, et donc le troisième arbre 40.

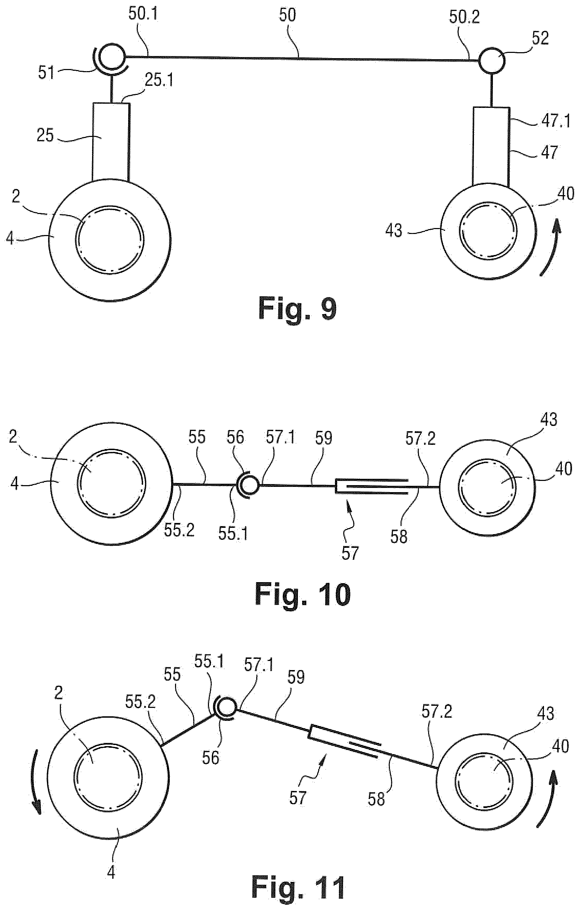

Selon un cinquième mode de réalisation représenté en figure 9, le couplage mécanique entre l'écrou 4 et la douille 43 comprend une bielle rigide 50 dont une première extrémité 50.1 est pourvue d'une liaison rotule 51 avec la première extrémité 25.1 de la première tige 25 solidaire de l'écrou 4. La deuxième extrémité 50.2 de la bielle rigide 50 est, quant à elle, pourvue d'une liaison pivot 52 d'axe sensiblement parallèle à l'axe Ox avec la première extrémité 47.1 de la deuxième tige 47 reliée à la douille 43. La bielle 50 permet donc une recopie de la position angulaire de l'écrou 4 autour de l'axe Ox vers la douille 43, et donc le troisième arbre 40.

Selon un sixième mode de réalisation représenté en figure 10 et 11, le couplage mécanique entre l'écrou 4 et la douille 43 comprend une première branche 55 dont la première extrémité 55.1 est reliée par une liaison rotule 56 à une première extrémité 57.1 d'une deuxième branche 57. La deuxième extrémité 55.2 de la première branche 55 est solidaire de l'écrou 4 et la deuxième extrémité 57.2 de la deuxième branche 57 est solidaire de la douille 43. La deuxième branche 57 comprend une colonne 58 montée à coulissement dans une douille à bille 59. La première branche 55 et la deuxième branche 57 sont ici comprises dans un plan comprenant l'axe Ox et l'axe du troisième arbre 40. La figure 11 illustre comment le couplage mécanique selon le cinquième mode de réalisation de l'invention permet la recopie de l'angle de rotation de l'écrou 4 vers la douille 43 par coulissement de la colonne 58 dans la douille à bille 59.

Les degrés de liberté des couplages mécaniques des troisième, quatrième, cinquième et sixième modes de réalisation permettent -en sus d'assurer une recopie de l'angle de rotation de l'écrou 4 vers la douille 43- de filtrer les effets perturbateurs d'un déversement de l'écrou 4 (oscillation mécanique, rotation selon un axe orthogonal à l'axe Ox) relativement à la vis 2.

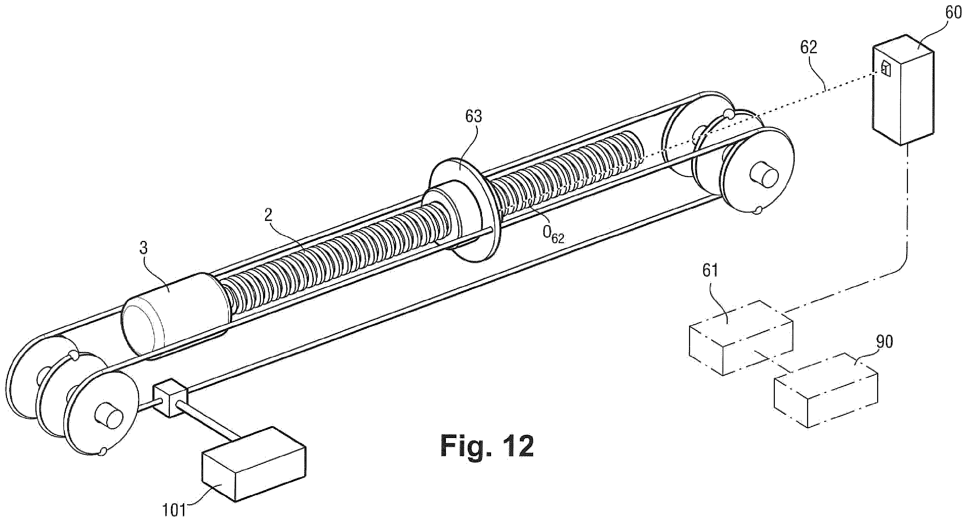

Selon un septième mode de réalisation de l'invention représenté en figure 12, un capteur de distance 60 à faisceau laser est solidaire du châssis 10. Le capteur de distance 60 est relié à une unité de traitement 61, elle-même reliée à l'unité de commande 90. Le faisceau laser 62 du capteur de distance 60 s'étend selon une direction O62 sensiblement parallèle au premier axe Ox. Un disque 63 réfléchissant s'étend en saillie radiale de l'écrou 4. Le capteur de distance 60 est agencé pour que le faisceau laser 62 soit réfléchi par le disque 63.

En fonctionnement, l'unité 91 détermine en temps réel, au cours d'une première étape, une position théorique de l'écrou 4 sur la vis 2 basée sur le nombre de tours N du moteur mesuré par le codeur 3.1. L'unité 91 établit ainsi une position linéaire théorique de l'écrou 4 sur la vis 2 selon l'axe Ox. La position théorique linéaire de l'écrou 4 sur la vis 2 correspond à la position selon l'axe Ox qu'occuperait l'écrou 4 sur la vis 2 après un nombre de tours $\underline{N}$ hors charge, c'est-à-dire pour une masse nulle de la charge 101. Pour des commodités de description, nous considérerons que les positions angulaires et linéaires sont mesurées dans un repère orthonormé (Ox, Oy, Oz) lié à l'écrou 4.

L'unité de traitement 61 estime la valeur de la distance $D_{60-63}$ séparant le capteur de distance 60 du disque 63. Cette estimation est communiquée au calculateur 93 de l'unité de commande 90 de contrôle qui la convertit en une position linéaire effective de l'écrou 4 sur la vis 2 selon le premier axe Ox. Le comparateur 92 compare la position linéaire effective de l'écrou 4 selon le premier axe Ox avec la position linéaire théorique de l'écrou selon l'axe Ox et, par soustraction, le comparateur obtient une valeur $\delta_{lin4}$ de la déviation de la position linéaire de l'écrou 4.

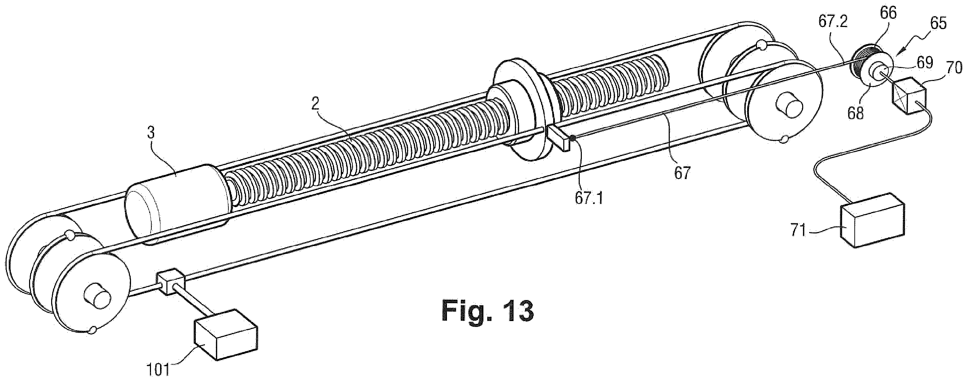

Le calculateur 93 détermine alors un effort appliqué sur le support 22.3 par la charge 101 en fonction de la valeur $\delta_{lin4}$ de la déviation de la position linéaire de l'écrou 4. La détermination de l'effort appliqué sur le support 22.3 par la charge 101 peut se faire en combinant l'équation 27 d'équilibrage et le pas p2 de la vis 2. Une analyse tribologique complémentaire de la liaison entre les filets respectifs de l'écrou 4 et de la vis 2 peut permettre d'affiner encore l'estimation de l'effort. Selon un huitième mode de réalisation de l'invention représenté en figure 13, un capteur de distance 65 à enrouleur 66 de fil 67 est solidaire du châssis 10. Le fil 67 comprend une première extrémité 67.1 de fil 67 reliée à l'écrou 4 et une deuxième extrémité 67.2 de fil 67 reliée à un tambour 68 de l'enrouleur 66. Un ressort

69 en spirale exerce un effort de rappel sur le tambour 68 et maintient une tension permanente dans le fil 67. Un troisième codeur rotatif 70 mesure la rotation du tambour 68. Le troisième codeur rotatif 70 du capteur de distance 65 est relié à une unité de traitement 71, elle-même reliée à l'unité de commande 90.

En fonctionnement, la position effective de l'écrou 4 sur la vis 2 est déterminée par le nombre de rotations du tambour 68 enregistré par le troisième codeur rotatif 70. L'unité de traitement 71 de traitement mesure la rotation du troisième codeur rotatif 70 et le transmet à l'unité de commande 90. Le comparateur 92 de l'unité de commande 90 compare la position effective de l'extrémité 67.1 avec sa position théorique et en déduit une variation de la distance entre cette extrémité 67.1 et le point du fil 67 tangent au tambour 68. Par un calcul géométrique, l'unité de commande 90 peut aussi bien déduire de la déviation de position 54 une déviation de position angulaire $\delta_{ang4}$ ou une déviation linéaire de position $\delta_{lin4}$. Le calculateur 93 détermine alors un effort appliqué sur le support 22.3 par la charge 101 en fonction de la valeur $\delta_{ang4}$ de la déviation de la position angulaire de l'écrou 4 de la même façon que pour le premier mode de réalisation de l'invention exposé précédemment.

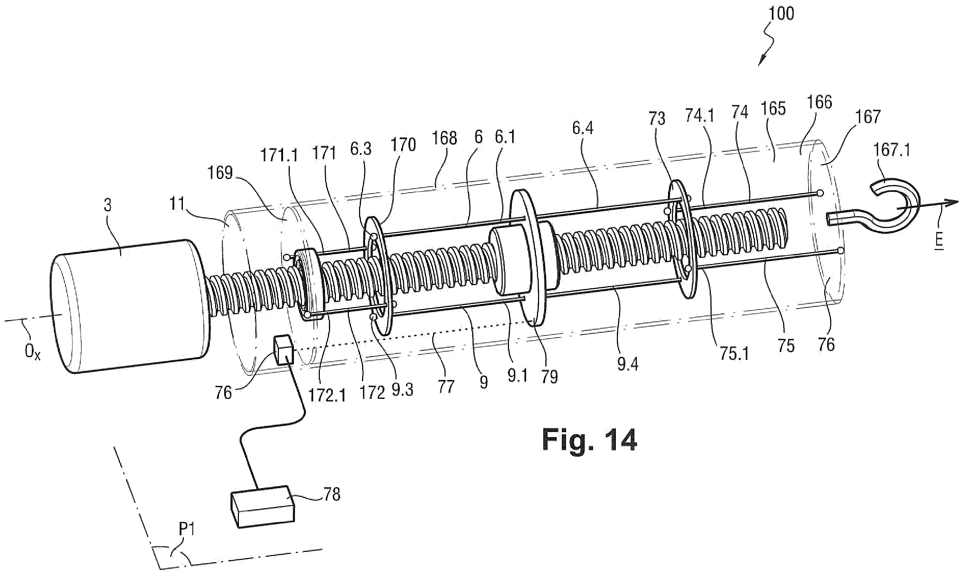

Selon un neuvième mode de réalisation représenté en figure 14, l'actionneur à câble 100 comprend un tube 165 monté à l'intérieur du cylindre 11 pour former une liaison glissière selon des modalités connues de l'homme du métier et non représentées. Le tube 165 comprend en sa première extrémité 166 une première face transversale 167 pourvue d'un crochet 167.1. La deuxième extrémité 168 du tube 165 comprend une deuxième face transversale 169 annulaire.

L'actionneur à câble 100 comprend également un premier support intermédiaire 170 annulaire auquel sont reliées les deuxièmes extrémités 6.3 et 9.3 respectives du premier tronçon 6.1 de premier câble 6 et du premier tronçon 9.1 du deuxième câble 9. Un premier tronçon 171.1 d'un quatrième câble 171 et un premier tronçon 72.1 d'un cinquième câble 72 s'étendent parallèlement au premier axe Ox pour relier le premier support intermédiaire 170 et la deuxième face transversale 169 du tube 165.

Le premier tronçon 171.1 et le premier tronçon 72.1 s'étendent de part et d'autre du premier axe Ox dans un plan P1 comprenant le premier axe Ox. Le plan P1 s'étend sensiblement orthogonalement à un plan P2 comprenant le premier tronçon 6.1 du premier câble 6 et le premier tronçon 9.1 du deuxième câble 9.

L'actionneur à câble 100 comprend également un deuxième support intermédiaire 73 annulaire auquel sont reliées les deuxièmes extrémités 6.6 et 9.6 respectives du deuxième tronçon 6.4 du premier câble 6 et du deuxième tronçon 6.4 du deuxième câble 9. Un premier tronçon 74.1 d'un sixième câble 74 et un premier tronçon 75.1 d'un septième câble 75 s'étendent parallèlement au premier axe Ox pour relier le deuxième support intermédiaire 73 et la première face transversale 167 du tube 165.

Le premier tronçon 74.1 et le premier tronçon 75.1 s'étendent de part et d'autre du premier axe Ox dans le plan P1. Le deuxième tronçon 6.4 du premier câble 6 et le deuxième tronçon 9.4 du deuxième câble 9 s'étendent dans le plan P2.

Sous l'effet du moteur 3, une rotation de la vis 2 provoque une rotation identique de l'écrou 4 en raison des frottements de contact entre la vis 2 et l'écrou 4. Ce déplacement met en tension le premier câble 6 et le deuxième câble 9 ainsi que le quatrième câble 171, le cinquième câble 72, le sixième câble 74 et le septième câble 75. Le premier câble 6 et le deuxième câble 9 viennent exercer des efforts s'opposant à un entrainement en rotation de l'écrou 4 par la vis 2, et ces efforts sont transmis aux quatrième câble 171, cinquième câble 72, sixième câble 74 et septième câble 75. Les câbles 6, 9, 171, 72, 74 et 75 réalisent alors - en sus de leurs fonctions de transmission des efforts de déplacement depuis l'écrou 4 vers le crochet 167.1- une fonction d'anti-rotation de sorte qu'une rotation de la vis 2 sous l'action du moteur 3 provoque un déplacement de l'écrou 4 relativement à la vis 2. Ainsi, l'écrou 4 se déplace axialement sous l'effet de la rotation de la vis 2, sans tourner autour du premier axe Ox.

Dans ce neuvième mode de réalisation, un capteur de distance 76 à faisceau laser 77 est solidaire du cylindre 11. Le capteur de distance 76 est relié à une unité de traitement 78, elle-même reliée à l'unité de commande 90. Le faisceau laser 77 du capteur de distance 76 s'étend selon une direction $O_{77}$ sensiblement parallèle au premier axe Ox. Un disque 79 réfléchissant s'étend en saillie radiale de l'écrou 4. Le capteur de distance 76 est agencé pour que le faisceau laser 77 soit réfléchi par le disque 79.

Le fonctionnement de l'actionneur selon le huitième mode de réalisation est identique au fonctionnement de l'actionneur selon le sixième mode de réalisation.

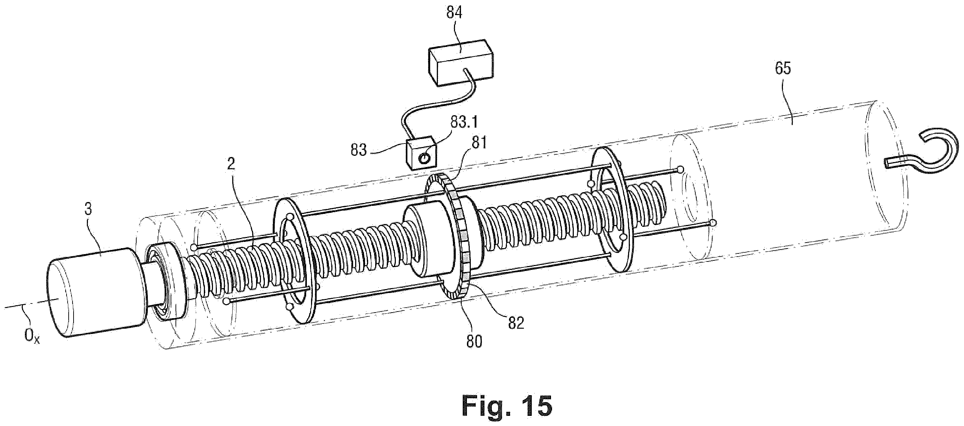

Selon un dixième mode de réalisation représenté en figure 15, un disque 80 s'étend en saillie radiale de l'écrou 4. La périphérie du disque 80 porte mille huit cent premiers pôles 81 magnétiques de polarité positive alternant avec mille huit cent deuxième pôles 82 magnétique de polarité négative. Un capteur magnétique 83 solidaire du tube 165 possède une cellule sensible 83.1 s'étendant face à la périphérie du disque 80. Le capteur magnétique 83 est relié à une unité de traitement 84 elle-même reliée à l'unité de commande 90.

En fonctionnement, la position angulaire effective de l'écrou 4 sur la vis 2 est déterminée par le nombre d'impulsions magnétiques enregistré par le capteur magnétique 83 et qui sont générées par les premiers pôles 81 et les deuxièmes pôles 82. L'unité de traitement 84 de traitement mesure le nombre d'impulsions magnétiques enregistré par le capteur magnétique 83 et le transmet à l'unité de commande 90. Le comparateur 92 de l'unité de commande 90 compare la position angulaire effective de l'écrou 4 autour de l'axe Ox avec la position angulaire théorique de l'écrou 4 autour de l'axe Ox et, par soustraction, le comparateur 92 obtient une valeur de la déviation de la position angulaire $\delta_{ang4}$ de l'écrou 4. Le calculateur 93 détermine alors la résultante selon le premier axe Ox d'un effort E appliqué sur le crochet 167.1 en fonction de la valeur $\delta_{ang4}$ de la déviation de la position angulaire de l'écrou 4 de la même façon que pour le premier mode de réalisation de l'invention exposé ci-dessus.

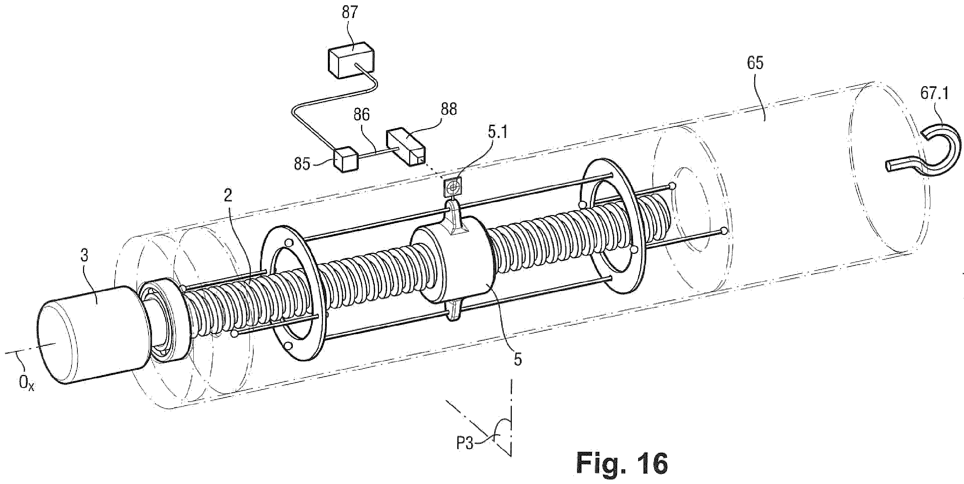

Selon un onzième mode de réalisation représenté en figure 16, un capteur de distance 85 à faisceau laser 86 est solidaire du cylindre 11. Le capteur de distance 85 est relié à une unité de traitement 87, elle-même reliée à l'unité de commande 90. Le faisceau laser 86 du capteur de distance 85 s'étend selon une direction $O_{86}$ comprise dans un plan P3 orthogonal au premier axe Ox. Le premier œillet 5 porte en son extrémité distale 5.1 une cible 88. Le capteur de distance 85 est agencé pour que le faisceau laser 86 soit réfléchi par la cible 88.

En fonctionnement, le capteur 85 mesure la distance $D_{85-88}$ le séparant de la cible 88 et transmet la valeur de cette distance $D_{85-88}$ au calculateur 93 qui la convertit en une position angulaire effective de l'écrou 4 autour de l'axe Ox. Le comparateur 92 compare la position angulaire effective de l'écrou 4 autour de l'axe Ox avec la position angulaire théorique de l'écrou autour de l'axe Ox et, par soustraction, le comparateur obtient une valeur $\delta_{ang4}$ de la déviation de la position angulaire de l'écrou 4.

Le calculateur 93 détermine alors la résultante selon le premier axe Ox d'un effort $\underline{E}$ appliqué sur le crochet 167.1 en fonction de la valeur $\delta_{ang4}$ de la déviation de la position angulaire de l'écrou 4 de la même façon que pour le premier mode de réalisation de l'invention exposé ci-dessus.

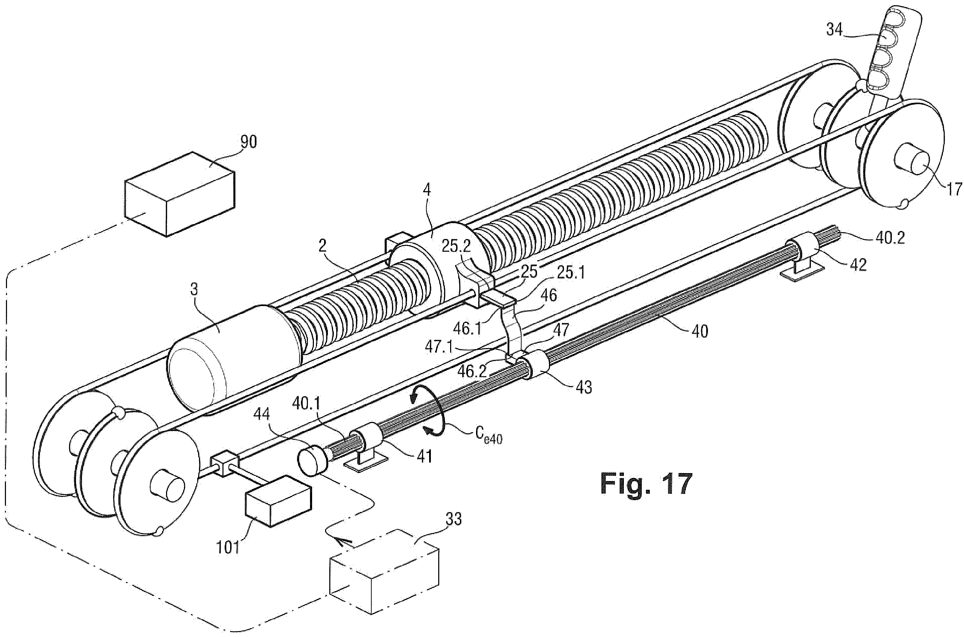

Selon un douzième mode de réalisation représenté en figure 17, le codeur 44 du troisième mode de réalisation comprend un mode moteur. Dans le mode moteur, lorsqu'une unité d'excitation 33 reliée au codeur 44 impose une tension aux bornes du codeur 44, la sortie du codeur 44 applique un effort d'excitation, ici un couple d'excitation $Ce_{40}$, sur le troisième arbre 40 qui le transmet à l'écrou 4. L'unité d'excitation 33 est préférentiellement reliée à l'unité de commande 90. Le couple d'excitation $Ce_{40}$ est préférentiellement faible et précisément piloté. Appliqué à haute fréquence, le couple d'excitation $Ce_{40}$ permet de simuler ou restituer des textures. Ainsi, dans le cas d'un actionneur à retour haptique comprenant une poignée 34 solidaire du deuxième arbre 17, le déplacement de l'écrou 4 est assuré à l'aide du moteur électrique 3. Le codeur 44, en mode moteur, applique un couple d'excitation $Ce_{40}$ à l'écrou 4 et permet de simuler une texture pendant le déplacement de l'écrou 4 ou une vibration lorsque l'écrou 4 est à l'arrêt. Par exemple l'application d'un couple d'excitation sinusoïdal permet de reproduire un ressenti d'une texture ondulée au niveau de la poignée 34.

Cette application est particulièrement utile dans le cadre d'un actionneur 100 mis en œuvre dans un dispositif de télé-opération haptique. En effet, l'utilisateur de la poignée 34 peut percevoir des textures des modifications de rugosité ou des vibrations qui ne pourraient être reproduites par le moteur 3.

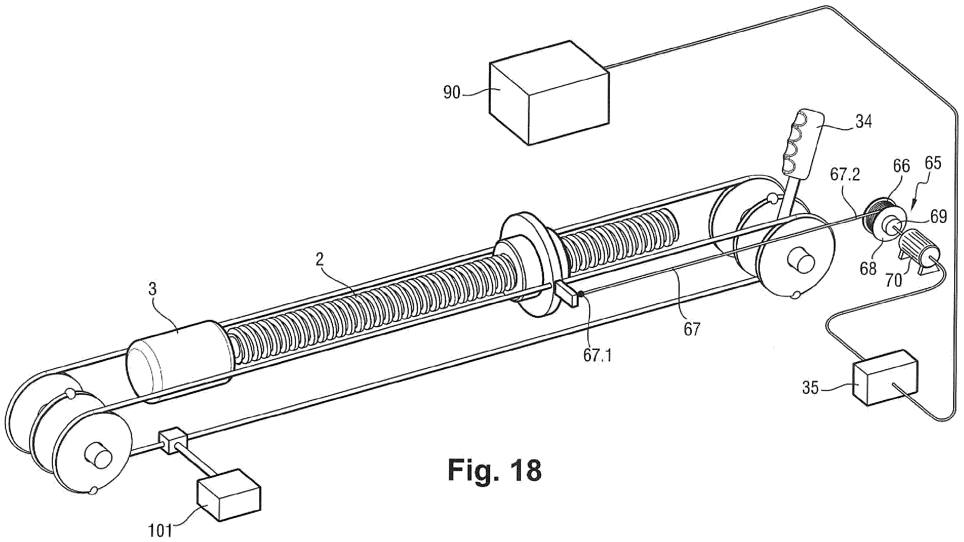

Selon un treizième mode de réalisation représenté en figure 18, le troisième codeur rotatif 70 du capteur de distance (65) de l'enrouleur 66 du huitième mode de réalisation de l'invention possède un mode moteur pour appliquer un couple sur l'écrou (4). De manière homologue au douzième mode de réalisation, lorsqu'une unité d'excitation 35 reliée au troisième codeur rotatif 70 impose une tension aux bornes du troisième codeur rotatif 70, la sortie troisième codeur rotatif 70 applique un effort d'excitation, ici une tension d'excitation $Te_{67}$, au fil 67 qui la transmet à l'écrou 4. L'unité d'excitation 35 est préférentiellement reliée à l'unité de commande 90. La tension d'excitation $Te_{67}$ est préférentiellement faible et précisément pilotée. Appliquée à haute fréquence, la tension d'excitation $Te_{67}$ permet de simuler ou restituer des textures, des niveaux de rugosités ou des vibrations.

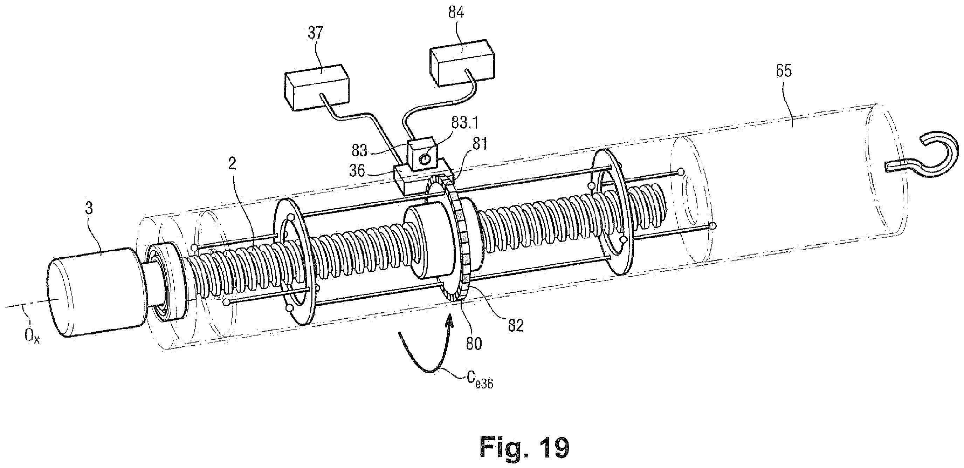

Selon un quatorzième mode de réalisation représenté en figure 19, l'actionneur 100 du dixième mode de réalisation comprend également un excitateur magnétique 36 pour appliquer un effort sur le premier pôle magnétisé 81 ou le deuxième pôle magnétisé 82. Ainsi, l'application d'une tension au bornes de l'excitateur magnétique 36 permet d'exercer un effort sur l'écrou 4.

Dans le mode moteur, lorsqu'une unité d'excitation 37 reliée à l'excitateur magnétique 36 impose une tension aux bornes de l'excitateur magnétique 36, ce dernier applique un effort d'excitation, ici un couple d'excitation $Ce_{36}$, sur le disque 80 qui le transmet à l'écrou 4. L'unité d'excitation 37 est préférentiellement reliée à l'unité de commande 90. Le couple d'excitation $Ce_{36}$ est préférentiellement faible et précisément piloté. Appliqué à haute fréquence, le couple d'excitation $Ce_{36}$ permet de simuler ou restituer des textures. Ainsi, dans le cas d'un actionneur à retour haptique comprenant une poignée 34 solidaire du deuxième arbre 17, le déplacement de l'écrou 4 est assuré à l'aide du moteur électrique 3. L'excitateur, en mode moteur, applique un couple d'excitation $Ce_{40}$ à l'écrou 4 et permet de simuler une texture pendant le déplacement de l'écrou 4 ou une vibration lorsque l'écrou 4 est à l'arrêt. Par exemple l'application d'un couple d'excitation sinusoïdal permet de reproduire un ressenti d'une texture ondulée au niveau de la poignée 34.

Cette application est particulièrement utile dans le cadre d'un actionneur 100 mis en œuvre dans un dispositif de télé-opération haptique. En effet, l'utilisateur de la poignée 34 peut percevoir des textures des modifications de rugosité ou des vibrations qui ne pourraient être reproduites par le moteur 3.

Bien entendu, l'invention n'est pas limitée à ce qui vient d'être décrit, mais englobe toute variante entrant dans le cadre de l'invention défini par les revendications.

En particulier,

- bien qu'ici, le châssis soit de forme cylindrique, l'invention s'applique également à d'autres formes de châssis comme par exemple une platine, un tube carré, une forme quelconque ;
- bien qu'ici l'axe de rotation de la vis s'étende horizontalement, l'invention s'applique également à d'autres orientations de l'axe de rotation de la vis comme par exemple une orientation verticale, à quarante-cinq degrés ou quelconque ;
- bien qu'ici l'actionneur à câble comprenne deux câbles reliés à l'écrou, l'invention s'applique également à un actionneur dont l'écrou est relié à un unique câble ou à plus de deux câbles ;
- bien qu'ici la sortie de l'actionneur à câble soit reliée à un câble pour fournir un mouvement de translation, l'invention s'applique également à une sortie solidaire en rotation de l'un des arbres de l'actionneur pour fournir un mouvement de rotation ;
- bien qu'ici l'aimant relié à l'écrou soit un aimant au néodyme, l'invention s'applique également à d'autres types d'inducteurs comme par exemple une bobine électrique, un aimant en ferrite, de type Alnico ou Samarium-Cobalt ;
- bien qu'ici la mesure du champ magnétique se fasse par exploitation de l'effet Hall, l'invention s'applique également à d'autres moyens de mesure du magnétisme comme par exemple un capteur magnétique utilisant l'effet Faraday, une magnétorésistance ;
- bien qu'ici l'utilisateur agisse sur une poignée pour commander l'actionneur, l'invention s'applique également à d'autres moyens de commande comme par exemple un interrupteur ou une commande vocale ;
- bien qu'ici la détermination de l'effort exercé par l'actionneur ait été décrite lorsque l'actionneur est stabilisé dans une position donnée, l'invention s'applique également à une mesure dynamique de l'effort pendant le mouvement de l'actionneur ;
- bien qu'ici le procédé de détermination de la précharge des câbles ait été décrit en lien avec le premier mode de réalisation de l'actionneur, le procédé de détermination de la précharge des câbles s'applique également aux autres modes de réalisation de l'invention ;
- bien qu'ici la sortie de l'actionneur soit immobilisée lorsque l'écrou est en la deuxième extrémité de la vis, l'invention s'applique également à d'autres positions prédéterminée de l'écrou (ou la sortie) relativement au châssis ;
- bien qu'ici l'actionneur comprenne une vis à billes, l'invention s'applique également à d'autres types de vis comme par exemple une vis à filets simples, ou à rouleaux ;
- bien qu'ici le réflecteur soit une tôle métallique blanche, l'invention s'applique également à d'autres types de réflecteurs comme par exemple un miroir, une tôle polie, une tôle simple ou tout élément dont la surface réalise une réflexion suffisante d'une onde pour permettre la mesure de son temps de trajet ;
- bien qu'ici le troisième arbre soit monté sur deux roulements à billes, l'invention s'applique également à d'autres moyens de montage à rotation du troisième arbre sur le châssis comme par exemple des douilles en bronze, des paliers à aiguilles, à billes ou à rouleaux coniques ;
- bien qu'ici le troisième arbre soit un arbre cannelé sur lequel est monté une douille à bille, l'invention s'applique également à d'autres moyens d'autoriser un coulissement relatif d'une douille par rapport au troisième arbre tout en en bloquant la rotation relative, comme par exemple un arbre et une douille cannelé, un arbre rainuré et une douille portant un doigt coopérant avec cette rainure ou un méplat sur l'arbre coopérant avec un méplat homologue de la douille ;
- bien qu'ici la lame métallique soit soudée sur l'extrémité d'une tige solidaire de l'écrou, l'invention s'applique également à une lame solidarisée directement sur l'écrou par d'autres moyens de liaison comme par exemple un sertissage, un brasage, un vissage ou un collage ;
- bien qu'ici la lame soit reliée par une rotule à l'écrou et par un encastrement à la douille, l'invention s'applique également à une liaison encastrée de la lame sur l'écrou et une liaison rotulée de la lame sur la douille, d'une manière générale les liaisons du couplage mécanique entre le premier élément et le deuxième élément (liaisons rotule/pivot, colonne/douille à bille, etc..) peuvent être inversée sans sortir du périmètre de l'invention ;
- bien qu'ici le couplage mécanique comprenne une colonne montée à coulissement dans une douille à bille, l'invention s'applique également à d'autres moyens de réaliser une portion télescopique comme par exemple un arbre cannelé monté à coulissement dans une douille homologue, un arbre monté à coulissement dans un palier en bronze ;
- bien qu'ici l'actionneur comprenne un capteur de distance à faisceau laser, l'invention s'applique également à d'autres types de capteur de distance comprenant un émetteur/récepteur d'ondes comme par exemple un émetteur/récepteur d'ultra-sons, émetteur/récepteur de lumière visible ou infra-rouge, ou encore des capteurs de distances à fil ou incrémentaux ;

- bien qu'ici l'écrou comporte un disque réfléchissant, l'invention s'applique également à d'autres types de réflecteurs comme par exemple un réflecteur de forme différente, ou un miroir, ou une cible active ;

- bien qu'ici l'actionneur à câble comprenne un crochet, l'invention s'applique également à d'autres types de sortie d'actionneur comme par exemple un patin de poussée, un anneau ou une bride ;

- bien qu'ici l'actionneur à câble comprenne un disque portant mille huit cent pôles de polarité magnétique positive montés en alternance avec mille huit cent pôles de polarité magnétique négative, l'invention s'applique également à d'autres types de capteurs incrémentaux corne par exemple des capteurs incrémentaux à points optiques ou possédant un nombre différent de pôles magnétiques ou une alternance de pôles magnétiques et a magnétiques ;

- bien qu'ici le capteur magnétique soit solidaire du tube, l'invention s'applique également à d'autres montages du capteur relativement à l'écrou, comme par exemple un capteur solidaire du cylindre ou solidaire du châssis et dont la cellule sensible s'étend sur toute la course de l'écrou ;

- bien qu'ici la cible soit montée en l'extrémité distale de l'œillet, l'invention s'applique également à d'autres points de montage de la cible sur l'écrou, comme par exemple sur une face transversale de l'écrou ou sur le corps de l'écrou ;

- bien qu'ici le premier câble soit attelé à l'écrou par un sertissage à un œillet solidaire de l'écrou, l'invention s'applique également à d'autres moyens d'atteler un câble à l'écrou comme par exemple un anneau soudé à l'écrou, une sertissure dans un perçage réalisé dans l'écrou, des tours morts dans un perçage, une fixation à un support intermédiaire ;

- bien qu'ici les câbles s'étendent parallèlement au premier axe, l'invention s'applique également à d'autres configurations des câbles dans lesquelles le câble peut adopter une orientation quelconque par rapport au premier axe ;

- bien que les première et troisième poulies soient solidaire d'un même arbre, l'invention s'applique également à des poulies montées sur des arbres indépendants ;

- bien qu'ici les premier, deuxième, quatrième, cinquième, sixième et septième câbles soient attelés à l'écrou par un support intermédiaire, l'invention s'applique également à des premier, deuxième, quatrième, cinquième, sixième et septième câbles attelés directement à l'écrou ;

- bien qu'ici l'ensemble des câbles de l'actionneur soient préchargés, l'invention s'applique également à un unique câble précharge, aucun câble précharge ou seulement une fraction des câbles préchargés ;

- bien qu'ici la vis soit montée dans un palier, l'invention s'applique également à d'autres moyens de montage à rotation de la vis sur le châssis comme par exemple une douille en bronze, un palier à aiguilles, à billes ou à rouleaux coniques ;

- bien qu'ici le procédé de mesure d'une précharge ait été décrit en référence au premier mode de réalisation de l'invention, un tel procédé est clairement applicable à toute variante entrant dans le cadre de l'invention défini par les revendications ;

- - bien qu'ici le codeur possède un mode moteur pour appliquer des efforts sur l'écrou, l'invention s'applique également à un excitateur dépourvu de fonctionnalité de codeur et dont la seule fonction est d'appliquer un effort sur l'écrou.

**Revendications**

1. Actionneur à câble (100) comprenant :

   - un châssis (10) ;
   - une vis (2) montée à rotation sur le châssis (10) et s'étendant selon un premier axe (Oy) ;
   - un écrou (4) coopérant avec la vis (2) ;
   - un premier câble (6) attelé à l'écrou (4) et fonctionnellement relié à une sortie (16, 17, 22.4) de l'actionneur (100) ;
   - un deuxième câble (9) attelé à l'écrou (4) et fonctionnellement relié à une sortie (22.4) de l'actionneur (100) ;
   - un moteur (3) agencé pour entrainer en rotation la vis (2) ;
   - le premier câble (6) étant agencé pour exercer des efforts s'opposant à un entraînement en rotation de l'écrou (4) par la vis (2) pour constituer des moyens d'anti-rotation de sorte qu'une rotation de la vis (2) sous l'action du moteur (3) provoque un déplacement de l'écrou (4) sur la vis (2),
   - l'actionneur à câble (100) comprenant également :
   - des moyens de déterminer (23, 24, 44, 60, 63, 70, 76, 83) une position effective de l'écrou (4) relativement au châssis (10), **caractérisé par le fait que** l'actionneur comprend de plus:

      - des moyens de comparer (92) la position effective de l'écrou (4) relativement au châssis (10) avec une position théorique de l'écrou (4) relativement au châssis (10) afin d'obtenir une déviation de position ($\delta_{ang4}$,

$\delta_{lin4}$) de l'écrou (4) ; et
- des moyens de déterminer (93) un effort appliqué sur la sortie (22.4) de l'actionneur à câble (100) en fonction de la déviation de position de l'écrou (4).

2. Actionneur à câble (100) selon la revendication 1, dans lequel la déviation de position ($\delta_{ang4}$, $\delta_{lin4}$) de l'écrou (4) est une déviation angulaire ($\delta_{ang4}$,) mesurée autour du premier axe (Oy).

3. Actionneur à câble (100) selon la revendication 2, dans lequel les moyens de déterminer (23, 24, 44, 60, 63, 70, 76, 83) la position effective de l'écrou (4) relativement au châssis (10) comprennent un induit linéaire (23) solidaire du châssis (10) et un inducteur (24) relié à l'écrou (4).

4. Actionneur à câble (100) selon la revendication 2, dans lequel les moyens de déterminer (23, 24, 44, 60, 63, 70, 76, 83) la position effective de l'écrou (4) relativement au châssis (10) comprennent un réflecteur (30) solidaire du châssis (10) et un capteur de distance (31) relié à l'écrou (4).

5. Actionneur à câble (100) selon la revendication 4, dans lequel le capteur de distance (31) comprend un émetteur/récepteur d'ondes.

6. Actionneur à câble (100) selon la revendication 2, dans lequel les moyens de déterminer (23, 24, 44, 60, 63, 70, 76, 83) la position effective de l'écrou (4) relativement au châssis (10) comprennent un capteur de distance (60) solidaire du châssis (10) et une cible (5.1) reliée à l'écrou.

7. Actionneur selon la revendication 6, dans lequel le capteur de distance (60) comprend un émetteur/récepteur d'ondes.

8. Actionneur à câble (100) selon la revendication 2, dans lequel les moyens de déterminer (23, 24, 44, 60, 63, 70, 76, 83) la position effective de l'écrou (4) relativement au châssis (10) comprennent une pluralité de pôles magnétisés solidaires (81, 82) de l'écrou (4) et un capteur magnétique (83).

9. Actionneur selon la revendication 8, comprenant un excitateur magnétique pour appliquer un effort sur au moins un pôle magnétisé (81,82).

10. Actionneur à câble (100) selon la revendication 2, dans lequel les moyens de déterminer (23, 24, 44, 60, 63, 70, 76, 83) la position effective de l'écrou (4) relativement au châssis (10) comprennent un couplage mécanique reliant un premier élément (43) relié au châssis (10) et un deuxième élément (25) solidaire de l'écrou (4), le premier (43) élément comprenant :

    - un troisième arbre (40) monté à rotation sur le châssis (10) selon un axe sensiblement parallèle au premier axe (Oy) ;
    - une douille (43) montée à coulissement sur le troisième arbre (40) et pourvue de moyens de bloquer une rotation relative de la douille (43) et du troisième arbre (40) ;
    - un codeur rotatif (44) pour mesurer la rotation du troisième arbre (40).

11. Actionneur à câble (100) selon l'une quelconque des revendications 7 à 9, dans lequel le couplage mécanique comprend un lien flexible (46).

12. Actionneur à câble (100) selon la revendication 10, dans lequel le lien flexible (46) comprend une première extrémité (46.1) pourvue d'une liaison rotule (48) avec l'un des premiers (25.1) ou deuxième (47) élément, la deuxième extrémité (46.2) du lien flexible (46) étant encastrée sur l'autre des premier (25.1) ou deuxième élément (25.2).

13. Actionneur à câble (100) selon l'une quelconque des revendications 7 à 9, dans lequel le couplage mécanique comprend une bielle rigide (50) dont une première extrémité (50.1) est pourvue d'une liaison rotule (51) avec l'un des premiers (25) ou deuxième élément (47), la deuxième extrémité (50.2) de la bielle étant pourvue d'une liaison pivot (52) avec l'autre des premier (25) ou deuxième élément (47).

14. Actionneur à câble (100) selon l'une quelconque des revendications 7 à 9, dans lequel le couplage mécanique comprend une première branche (55) dont la première extrémité (55.1) est reliée par une liaison rotule (56) à une première extrémité (57.1) d'une deuxième branche (57), la deuxième extrémité (55.2) de la première branche (55)

**EP 3 660 353 B1**

étant solidaire de l'un des premier (25) ou deuxième élément (47) et la deuxième extrémité (57.2) de la deuxième branche (57) étant solidaire de l'autre des premier (25) ou deuxième élément (47), la deuxième branche (57) comprenant une portion télescopique.

**15.** Actionneur à câble selon l'une quelconque des revendications 9 à 13, dans lequel le codeur rotatif (44) possède un mode moteur pour appliquer un effort d'excitation ($Ce_{40}$) sur l'écrou (4).

**16.** Actionneur à câble (100) selon la revendication 1, dans lequel la déviation de position ($\delta ang4$, $\delta lin4$) de l'écrou (4) est une déviation linéaire ($\delta lin4$) mesurée selon le premier axe (Oy).

**17.** Actionneur à câble (100) selon la revendication 15, dans lequel les moyens (23, 24, 44, 60, 63, 70, 76, 83) de déterminer une position effective de l'écrou (4) relativement au châssis (10) comprennent un capteur de distance (65) à enrouleur (68) de fil (67) solidaire du châssis (10), une extrémité (67.1) du fil (67) étant reliée à l'écrou (4).

**18.** Actionneur à câble selon la revendication 16, dans lequel le capteur de distance (65) possède un mode moteur pour appliquer un effort d'excitation ($Te_{67}$) sur l'écrou (4) .

**19.** Actionneur à câble (100) selon la revendication 14, dans lequel les moyens (23, 24, 44, 60, 63, 70, 76, 83) de déterminer la position effective de l'écrou (4) relativement au châssis (10) comprennent un capteur de distance (88) solidaire du châssis (10) et une cible (5.1) reliée à l'écrou (4).

**20.** Actionneur à câble (100) selon l'une quelconque des revendications précédentes, dans lequel la sortie de l'actionneur à câble (100) est un arbre (16, 17) monté à rotation sur le châssis (10).

**21.** Actionneur à câble (100) selon l'une quelconque des revendications précédentes, dans lequel la sortie (24.1) de l'actionneur à câble (100) est montée à coulissement sur le châssis (10).

**22.** Procédé de mesure d'un effort appliqué en sortie d'un actionneur à câble (100) comprenant :

- un châssis (10) ;
- une vis (2) montée sur le châssis (10) et s'étendant selon un premier axe (Oy) ;
- un écrou (4) coopérant avec la vis (2) ;
- un premier câble (6) attelé à l'écrou (4) et fonctionnellement relié à une sortie (24.1) de l'actionneur à câble (100) tel que décrit dans la revendication 1 ;
- le procédé de mesure d'effort comprenant les étapes suivantes :

- déterminer une position effective de l'écrou (4) relativement au châssis (10) ;
- comparer la position effective de l'écrou (4) relativement au châssis (10) avec une position théorique de l'écrou (4) relativement au châssis (10) afin d'obtenir une déviation de position ($\delta_{ang4}$, $\delta_{lin4}$) de l'écrou (4) ;
- déterminer un effort appliqué sur la sortie (24.1, 16, 17) de l'actionneur à câble (100) en fonction de la déviation de positon ($\delta_{ang4}$, $\delta_{lin4}$) de l'écrou (4).

**23.** Procédé de mesure selon la revendication 22, dans lequel la déviation de position ($\delta ang4$, $\delta lin4$) est une déviation angulaire ($\delta ang4$) autour du premier axe (Oy).

**24.** Procédé de mesure selon la revendication 22, dans lequel la déviation de position ($\delta ang4$, $\delta lin4$) est une déviation linéaire ($\delta lin4$) selon le premier axe (Oy).

**25.** Procédé de détermination d'une précharge ($t6,9$) d'un actionneur à câble (100) tel que décrit dans la revendication 1,

- le procédé de mesure de la précharge ($t_0$) comprenant les étapes suivantes :

- amener l'écrou (4) à une position prédéterminée relativement au châssis (10) ;
- immobiliser la sortie (16, 17, 24.1) de l'actionneur à câble (100) ;
- commander le moteur (3) pour qu'il applique un couple prédéterminé à la vis (2) ;
- déterminer une position effective de l'écrou (4) relativement au châssis (10) ;
- comparer la position effective de l'écrou (4) relativement au châssis (10) avec la position prédéterminée de l'écrou (4) relativement au châssis (10) afin d'obtenir une déviation de position ($\delta_{ang4}$, $\delta_{lin4}$) de l'écrou (4) ;

13

**EP 3 660 353 B1**

- déterminer une précharge ($t_0$) agissant au moins sur le premier câble (6) en fonction de la déviation de position ($\delta_{ang4}$, $\delta_{lin4}$) de l'écrou (4).

**Patentansprüche**

1. Aktor (100) mit Kabel, umfassend:

   - einen Rahmen (10);
   - eine Schraube (2), die an dem Rahmen (10) drehbar gelagert ist und sich entlang einer ersten Achse (Oy) erstreckt;
   - eine Mutter (4), die mit der Schraube (2) zusammenwirkt;
   - ein erstes Kabel (6), das an die Mutter (4) gekoppelt und funktional mit einem Ausgang (16, 17, 22.4) des Aktors (100) verbunden ist;
   - ein zweites Kabel (9), das an die Mutter (4) gekoppelt und funktional mit einem Ausgang (22.4) des Aktors (100) verbunden ist;
   - einen Motor (3), der ausgebildet ist, um die Schraube (2) in Drehung anzutreiben;
   - wobei das erste Kabel (6) ausgebildet ist, um Kräfte auszuüben, die sich einem Drehantrieb der Mutter (4) durch die Schraube (2) widersetzen, um Antirotationsmittel zu bilden, sodass eine Drehung der Schraube (2) unter der Wirkung des Motors (3) eine Verschiebung der Mutter (4) auf der Schraube (2) bewirkt,
   - wobei der Aktor (100) mit Kabel ferner umfasst:
   - Bestimmungsmittel (23, 24, 44, 60, 63, 70, 76, 83) zum Bestimmen einer tatsächlichen Position der Mutter (4) relativ zum Rahmen (10), **gekennzeichnet durch** die Tatsache, dass der Aktor außerdem umfasst:

      - Vergleichsmittel (92) zum Vergleichen der tatsächlichen Position der Mutter (4) relativ zum Rahmen (10) mit einer theoretischen Position der Mutter (4) relativ zum Rahmen (10), um eine Positionsabweichung ($\delta_{ang4}$, $\delta_{lin4}$) der Mutter (4) zu erhalten; und
      - Bestimmungsmittel (93) zum Bestimmen einer auf den Ausgang (22.4) des Aktors (100) mit Kabel aufgebrachten Kraft in Abhängigkeit von der Positionsabweichung der Mutter (4).

2. Aktor (100) mit Kabel nach Anspruch 1, bei dem die Positionsabweichung ($\delta$ang4, $\delta$lin4) der Mutter (4) eine um die erste Achse (Oy) herum gemessene Winkelabweichung ($\delta$ang4) ist.

3. Aktor (100) mit Kabel nach Anspruch 2, bei dem die Bestimmungsmittel (23, 24, 44, 60, 63, 70, 76, 83) zum Bestimmen der tatsächlichen Position der Mutter (4) relativ zum Rahmen (10) einen fest mit dem Rahmen (10) verbundenen Linearanker (23) und einen mit der Mutter (4) verbundenen Induktor (24) umfassen.

4. Aktor (100) mit Kabel nach Anspruch 2, bei dem die Bestimmungsmittel (23, 24, 44, 60, 63, 70, 76, 83) zum Bestimmen der tatsächlichen Position der Mutter (4) relativ zum Rahmen (10) einen fest mit dem Rahmen (10) verbundenen Reflektor (30) und einen mit der Mutter (4) verbundenen Abstandssensor (31) umfassen.

5. Aktor (100) mit Kabel nach Anspruch 4, bei dem der Abstandssensor (31) einen Wellen-Sender/Empfänger umfasst.

6. Aktor (100) mit Kabel nach Anspruch 2, bei dem die Bestimmungsmittel (23, 24, 44, 60, 63, 70, 76, 83) zum Bestimmen der tatsächlichen Position der Mutter (4) relativ zum Rahmen (10) einen fest mit dem Rahmen (10) verbundenen Abstandssensor (60) und ein mit der Mutter verbundenes Ziel (5.1) umfassen.

7. Aktor nach Anspruch 6, bei dem der Abstandssensor (60) einen Wellen-Sender/Empfänger umfasst.

8. Aktor (100) mit Kabel nach Anspruch 2, bei dem die Bestimmungsmittel (23, 24, 44, 60, 63, 70, 76, 83) zum Bestimmen der tatsächlichen Position der Mutter (4) relativ zum Rahmen (10) eine Vielzahl von fest mit der Mutter (4) verbundenen magnetisierten Polen (81, 82) und einen Magnetsensor (83) umfassen.

9. Aktor nach Anspruch 8, umfassend einen Magneterreger zum Aufbringen einer Kraft auf mindestens einen magnetisierten Pol (81, 82).

10. Aktor (100) mit Kabel nach Anspruch 2, bei dem die Bestimmungsmittel (23, 24, 44, 60, 63, 70, 76, 83) zum Bestimmen der tatsächlichen Position der Mutter (4) relativ zum Rahmen (10) eine mechanische Kopplung umfassen,

**14**

die ein mit dem Rahmen (10) verbundenes erstes Element (43) und ein fest mit der Mutter (4) verbundenes zweites Element (25) verbindet, wobei das erste Element (43) umfasst:

- eine dritte Welle (40), die an dem Rahmen (10) drehbar um eine Achse gelagert ist, die im Wesentlichen parallel zur ersten Achse (Oy) ist;
- eine Hülse (43), die auf der dritten Welle (40) verschiebbar gelagert und mit Mitteln zum Blockieren einer relativen Drehung der Hülse (43) und der dritten Welle (40) versehen ist;
- einen Drehgeber (44) zum Messen der Drehung der dritten Welle (40).

**11.** Aktor (100) mit Kabel nach einem der Ansprüche 7 bis 9, bei dem die mechanische Kopplung ein flexibles Verbindungsteil (46) umfasst.

**12.** Aktor (100) mit Kabel nach Anspruch 10, bei dem das flexible Verbindungsteil (46) ein erstes Ende (46.1) umfasst, das mit einer Kugelgelenkverbindung (48) zur Verbindung mit einem Element aus dem ersten Element (25.1) oder dem zweiten Element (47) versehen ist, wobei das zweite Ende (46.2) des flexiblen Verbindungsteils (46) in das andere Element aus dem ersten Element (25.1) oder dem zweiten Element (25.2) eingelassen ist.

**13.** Aktor (100) mit Kabel nach einem der Ansprüche 7 bis 9, bei dem die mechanische Kopplung eine starre Pleuelstange (50) umfasst, von der ein erstes Ende (50.1) mit einer Kugelgelenkverbindung (51) zur Verbindung mit einem Element aus dem ersten Element (25) oder dem zweiten Element (47) versehen ist, wobei das zweite Ende (50.2) der Pleuelstange mit einer Schwenkverbindung (52) zur Verbindung mit dem anderen Element aus dem ersten Element (25) oder dem zweiten Element (47) versehen ist.

**14.** Aktor (100) mit Kabel nach einem der Ansprüche 7 bis 9, bei dem die mechanische Kopplung einen ersten Schenkel (55) umfasst, dessen erstes Ende (55.1) über eine Kugelgelenkverbindung (56) mit einem ersten Ende (57.1) eines zweiten Schenkels (57) verbunden ist, wobei das zweite Ende (55.2) des ersten Schenkels (55) fest mit einem Element aus dem ersten Element (25) oder dem zweiten Element (47) verbunden ist und das zweite Ende (57.2) des zweiten Schenkels fest mit dem anderen Element aus dem ersten Element (25) oder dem zweiten Element (47) verbunden ist, wobei der zweite Schenkel (57) einen Teleskopabschnitt umfasst.

**15.** Aktor mit Kabel nach einem der Ansprüche 9 bis 13, bei dem der Drehgeber (44) einen Motormodus besitzt, um eine Erregungskraft ($Ce_{40}$) auf die Mutter (4) aufzubringen.

**16.** Aktor (100) mit Kabel nach Anspruch 1, bei dem die Positionsabweichung ($\delta$ang4, $\delta$lin4) der Mutter (4) eine entlang der ersten Achse (Oy) gemessene lineare Abweichung ist.

**17.** Aktor (100) mit Kabel nach Anspruch 15, bei dem die Bestimmungsmittel (23, 24, 44, 60, 63, 70, 76, 83) zum Bestimmen einer tatsächlichen Position der Mutter (4) relativ zum Rahmen (10) einen fest mit dem Rahmen (10) verbundenen Abstandsensor (65) mit einem Aufwickler (68) zum Aufwickeln eines Drahtes (67) umfasst, wobei ein Ende (67.1) des Drahtes (67) mit der Mutter (4) verbunden ist.

**18.** Aktor mit Kabel nach Anspruch 16, bei dem der Abstandssensor (65) einen Motormodus besitzt, um eine Erregungskraft ($Te_{67}$) auf die Mutter (4) aufzubringen.

**19.** Aktor (100) mit Kabel nach Anspruch 14, bei dem die Bestimmungsmittel (23, 24, 44, 60, 63, 70, 76, 83) zum Bestimmen der tatsächlichen Position der Mutter (4) relativ zum Rahmen (10) einen fest mit dem Rahmen (10) verbundenen Abstandssensor (88) und ein mit der Mutter (4) verbundenes Ziel (5.1) umfassen.

**20.** Aktor (100) mit Kabel nach einem der vorhergehenden Ansprüche, bei dem der Ausgang des Aktors (100) mit Kabel eine Welle (16, 17) ist, die an dem Rahmen (10) drehbar gelagert ist.

**21.** Aktor (100) mit Kabel nach einem der vorhergehenden Ansprüche, bei dem der Ausgang (24.1) des Aktors (100) mit Kabel an dem Rahmen (10) verschiebbar gelagert ist.

**22.** Messverfahren zum Messen einer am Ausgang eines Aktors (100) mit Kabel aufgebrachten Kraft, wobei der Aktor umfasst:

- einen Rahmen (10);

- eine Schraube (2), die an dem Rahmen (10) gelagert ist und sich entlang einer ersten Achse (Oy) erstreckt;
- eine Mutter (4), die mit der Schraube (2) zusammenwirkt;
- ein erstes Kabel (6), das an die Mutter (4) gekoppelt und funktional mit einem Ausgang (24.1) des Aktors (100) mit Kabel, wie er in Anspruch 1 beschrieben ist, verbunden ist;
- wobei das Messverfahren zum Messen der Kraft die folgenden Schritte umfasst:

  - Bestimmen einer tatsächlichen Position der Mutter (4) relativ zum Rahmen (10);
  - Vergleichen der tatsächlichen Position der Mutter (4) relativ zum Rahmen (10) mit einer theoretischen Position der Mutter (4) relativ zum Rahmen (10), um eine Positionsabweichung ($\delta_{ang4}$, $\delta_{lin4}$) der Mutter (4) zu erhalten;
  - Bestimmen einer auf den Ausgang (24.1, 16, 17) des Aktors (100) mit Kabel aufgebrachten Kraft in Abhängigkeit von der Positionsabweichung ($\delta_{ang4}$, $\delta_{lin4}$) der Mutter (4).

23. Messverfahren nach Anspruch 22, bei dem die Positionsabweichung ($\delta ang4$, $\delta lin4$) eine Winkelabweichung ($\delta ang4$) um die erste Achse (Oy) ist.

24. Messverfahren nach Anspruch 22, bei dem die Positionsabweichung ($\delta ang4$, $\delta lin4$) eine lineare Abweichung ($\delta lin4$) entlang der ersten Achse (Oy) ist.

25. Bestimmungsverfahren zum Bestimmen einer Vorbelastung (t6, 9) eines Aktors (100) mit Kabel, wie er in Anspruch 1 beschrieben ist,

  - wobei das Messverfahren zum Messen der Vorbelastung ($t_0$) die folgenden Schritte umfasst:

    - Bringen der Mutter (4) in eine vorbestimmte Position relativ zum Rahmen (10);
    - Blockieren des Ausgangs (16, 17, 24.1) des Aktors (100) mit Kabel;
    - Steuern des Motors (3), damit er ein vorbestimmtes Drehmoment auf die Schraube (2) aufbringt;
    - Bestimmen einer tatsächlichen Position der Mutter (4) relativ zum Rahmen (10);
    - Vergleichen der tatsächlichen Position der Mutter (4) relativ zum Rahmen (10) mit der vorbestimmten Position der Mutter (4) relativ zum Rahmen (10), um eine Positionsabweichung ($\delta_{ang4}$, $\delta_{lin4}$) der Mutter (4) zu erhalten;
    - Bestimmen einer mindestens auf das erste Kabel (6) wirkenden Vorbelastung ($t_0$) in Abhängigkeit von der Positionsabweichung ($\delta_{ang4}$, $\delta_{lin4}$) der Mutter (4).

**Claims**

1. A cable actuator (100) comprising:

    • a frame (10);
    • a screw (2) rotatably mounted on the frame (10) and extending along a first axis (Oy);
    • a nut (4) co-operating with the screw (2);
    • a first cable (6) coupled to the nut (4) and functionally connected to an output (16, 17, 22.4) of the actuator (100);
    • a second cable (9) coupled to the nut (4) and functionally connected to an output (22.4) of the actuator (100); and
    • a motor (3) arranged to drive the screw (2) in rotation;
    • the first cable (6) being arranged to exert forces opposing the nut (4) being driven in rotation by the screw (2) so as to constitute anti-rotation means such that rotation of the screw (2) under drive from the motor (3) causes the nut (4) to move along the screw (2);

      - the cable actuator (100) also comprising:

        • means (23, 24, 44, 60, 63, 70, 76, 83) for determining the actual position of the nut (4) relative to the frame (10), **characterized in that** the actuator also comprises :

          • means (92) for comparing the actual position of the nut (4) relative to the frame (10) with a theoretical position for the nut (4) relative to the frame (10) in order to obtain a position deviation ($\delta_{ang4}$, $\delta_{lin4}$) of the nut (4); and
          • means (93) for determining a force applied to the output (22.4) of the cable actuator (100) as a function of the position deviation of the nut (4).

2. A cable actuator (100) according to claim 1, wherein the position deviation ($\delta_{ang4}$, $\delta_{lin4}$) of the nut (4) is an angular deviation ($\delta_{ang4}$) measured about the first axis (Oy).

3. A cable actuator (100) according to claim 2, wherein the means (23, 24, 44, 60, 63, 70, 76, 83) for determining the actual position of the nut (4) relative to the frame (10) comprise a linear magnetic core (23) secured to the frame (10) and magnetic field induction means (24) connected to the nut (4).

4. A cable actuator (100) according to claim 2, wherein the means (23, 24, 44, 60, 63, 70, 76, 83) for determining the actual position of the nut (4) relative to the frame (10) comprise a reflector (30) secured to the frame (10) and a distance sensor (31) connected to the nut (4).

5. A cable actuator (100) according to claim 4, wherein the distance sensor (31) comprises a wave transceiver.

6. A cable actuator (100) according to claim 2, wherein the means (23, 24, 44, 60, 63, 70, 76, 83) for determining the actual position of the nut (4) relative to the frame (10) comprise a distance sensor (60) secured to the frame (10) and a target (5.1) connected to the nut (4) .

7. An actuator according to claim 6, wherein the distance sensor (60) comprises a wave transceiver.

8. A cable actuator (100) according to claim 2, wherein the means (23, 24, 44, 60, 63, 70, 76, 83) for determining the actual position of the nut (4) relative to the frame (10) comprise a plurality of magnetic poles (81, 82) secured to the nut (4) and a magnetic sensor (83) .

9. An actuator according to claim 8, including a magnetic exciter for applying a force on at least one magnetic pole (81, 82).

10. A cable actuator (100) according to claim 2, wherein the means (23, 24, 44, 60, 63, 70, 76, 83) for determining the actual position of the nut (4) relative to the frame (10) comprise a mechanical coupling connecting a first element (43) connected to the frame (10) with a second element (25) secured to the nut (4), the first element (43) comprising:

   • a third shaft (40) mounted on the frame (10) to rotate about an axis substantially parallel to the first axis (Oy);
   • a bushing (43) slidably mounted on the third shaft (40) and provided with means for preventing relative rotation between the bushing (43) and the third shaft (40); and
   • a rotary encoder (44) for measuring rotation of the third shaft (40).

11. A cable actuator (100) according to any one of claims 7 to 9, wherein the mechanical coupling comprises a flexible link (46).

12. A cable actuator (100) according to claim 10, wherein the flexible link (46) has a first end (46.1) provided with a ball joint connection (48) with one of the first and second elements (25.1, 47), the flexible link (46) having a second end (46.2) with a fixed connection to the other one of the first and second elements (25.1, 25.2).

13. A cable actuator (100) according to any one of claims 7 to 9, wherein the mechanical coupling comprises a rigid connecting rod (50) having a first end (50.1) provided with a ball joint connection (51) with one of the first and second elements (25, 47), the connecting rod having a second end (50.2) provided with a pivot connection (52) with the other one of the first and second elements (25, 47) .

14. A cable actuator (100) according to any one of claims 7 to 9, wherein the mechanical coupling comprises a first branch (55) having a first end (55.1) connected by a ball joint connection (56) to a first end (57.1) of a second branch (57), the first branch (55) having a second end (55.2) secured to one of the first and second elements (25, 47), and the second branch (57) having a second end (47.2) secured to the other one of the first and second elements (25, 47), the second branch (57) including a telescopic portion.

15. A cable actuator according to any one of claims 9 to 13, wherein the rotary encoder (44) possesses a motor mode in order to apply an excitation force ($Ce_{40}$) to the nut (4).

**16.** A cable actuator (100) according to claim 1, wherein the position deviation ($\delta_{ang4}$, $\delta_{lin4}$) of the nut (4) is a linear deviation ($\delta_{lin4}$) measured along the first axis (Oy).

**17.** A cable actuator (100) according to claim 15, wherein the means (23, 24, 44, 60, 63, 70, 76, 83) for determining the actual position of the nut (4) relative to the frame (10) comprise a distance sensor (65) having a wire winder (68) secured to the frame (10), one end (67.1) of its wire (67) being connected to the nut (4).

**18.** A cable actuator according to claim 16, wherein the distance sensor (65) possesses a motor mode in order to apply an excitation force ($Te_{67}$) to the nut (4) .

**19.** A cable actuator (100) according to claim 14, wherein the means (23, 24, 44, 60, 63, 70, 76, 83) for determining the actual position of the nut (4) relative to the frame (10) comprise a distance sensor (88) secured to the frame (10) and a target (5.1) connected to the nut (4) .

**20.** A cable actuator (100) according to any preceding claim, wherein the output of the cable actuator (100) is a shaft (16, 17) rotatably mounted on the frame (10).

**21.** A cable actuator (100) according to any preceding claim, wherein the output (24.1) of the cable actuator (100) is slidably mounted on the frame (100).

**22.** A measuring method for measuring a force applied at the output of a cable actuator (100) comprising:

    • a frame (10);
    • a screw (2) mounted on the frame (10) and extending along a first axis (Oy);
    • a nut (4) co-operating with the screw (2);
    • a first cable (6) coupled to the nut (4) and functionally connected to an output (24.1) of the cable actuator (100) as disclosed in claim 1;

the measuring method for measuring a force comprising the following steps:

    • determining the actual position of the nut (4) relative to the frame (10);
    • comparing the actual position of the nut (4) relative to the frame (10) with a theoretical position for the nut (4) relative to the frame (10) in order to obtain a position deviation ($\delta_{ang4}$, $\delta_{lin4}$) of the nut (4); and
    • determining a force applied to the output (24.1, 16, 17) of the cable actuator (100) as a function of the position deviation ($\delta_{ang4}$, $\delta_{lin4}$) of the nut (4) .

**23.** A measuring method according to claim 22, wherein the position deviation ($\delta_{ang4}$, $\delta_{lin4}$) of the nut (4) is an angular deviation ($\delta_{ang4}$) about the first axis (Oy).

**24.** A measuring method according to claim 22, wherein the position deviation ($\delta_{ang4}$, $\delta_{lin4}$) of the nut (4) is a linear deviation ($\delta_{lin4}$) along the first axis (Oy) .

**25.** A method of determining prior loading (t6,9) of a cable actuator (100) as disclosed in claim 1;
the method of measuring the prior loading (to) comprising the following steps:

    • bringing the nut (4) to a predetermined position relative to the frame (10);
    • holding the output (16, 17, 24.1) of the cable actuator (100) stationary;
    • controlling the motor (3) so that it applies a predetermined torque to the screw (2);
    • determining the actual position of the nut (4) relative to the frame (10);
    • comparing the actual position of the nut (4) relative to the frame (10) with the predetermined position for the nut (4) relative to the frame (10) in order to obtain a position deviation ($\delta_{ang4}$, $\delta_{lin4}$) of the nut (4); and
    • determining the prior loading (to) acting at least on the first cable (6) as a function of the position deviation ($\delta_{ang4}$, $\delta_{lin4}$) of the nut (4) .

**Fig. 1**

Fig. 2

**Fig. 3**

Fig. 4

Fig. 5

**Fig. 6**

**Fig. 7**

**Fig. 8**

**Fig. 9**

**Fig. 10**

**Fig. 11**

EP 3 660 353 B1

**Fig. 12**

Fig. 13

Fig. 14

EP 3 660 353 B1

Fig. 15

Fig. 16

Fig. 17

Fig. 18

**Fig. 19**

EP 3 660 353 B1

**EP 3 660 353 B1**

## RÉFÉRENCES CITÉES DANS LA DESCRIPTION

**Documents brevets cités dans la description**

- EP 3243606 A1